# EUROPEAN PATENT SPECIFICATION

(11) **EP 0 981 914 B1**
(45) Date of publication and mention of the grant of the patent: **25.07.2007**
(21) Application number: 98922295.5
(22) Date of filing: 13.05.1998
(51) Int. Cl.: H04Q 7/00

(54) **SUBSCRIBER UNIT WITH PLURAL CONTROL AND DATA SOURCES FOR CDMA WIRELESS COMMUNICATION SYSTEM**
TEILNEHMERGERÄT MIT MEHREREN STEUER- UND INFORMATIONSDATEN FÜR CDMA DRAHTLOSES KOMMUNIKATIONSSYSTEM
UNITE D'ABONNE ET PROCEDE UTILE DANS UN SYSTEME DE TELECOMMUNICATIONS SANS FIL

(30) Priority: 14.05.1997 US 856428
(43) Date of publication of application: 01.03.2000
(60) Divisional application: 05018037.1
(73) Proprietor: QUALCOMM INCORPORATED, San Diego, California 92121-1714 (US)
(72) Inventor: ODENWALDER, Joseph, P., Del Mar, CA 92014 (US)
(74) Representative: Walsh, Michael Joseph
(86) International application number: PCT/US1998/009868
(87) International publication number: WO 1998/052365

(56) References cited:
- WO-A-95/03652
- WO-A-97/45970
- WO-A-97/47098
- US-A- 4 901 307
- US-A- 5 103 459
- US-A- 5 329 547

## Description

### BACKGROUND OF THE INVENTION

### I. Field of the Invention

The present invention relates to a subscriber unit and method for use in a wireless communication system.

### II. Description of the Related Art

Wireless communication systems including cellular, satellite and point to point communication systems use a wireless link comprised of a modulated radio frequency (RF) signal to transmit data between two systems. The use of a wireless link is desirable for a variety of reasons including increased mobility and reduced infrastructure requirements when compared to wire line communication systems. One drawback of using a wireless link is the limited amount of communication capacity that results from the limited amount of available RF bandwidth. This limited communication capacity is in contrast to wire based communication systems where additional capacity can be added by installing additional wire line connections.

Recognizing the limited nature of RF bandwidth, various signal processing techniques have been developed for increasing the efficiency with which wireless communication systems utilize the available RF bandwidth. One widely accepted example of such a bandwidth efficient signal processing technique is the IS-95 over the air interface standard and its derivatives such as IS-95-A and ANSI J-STD-008 (referred to hereafter collectively as the IS-95 standard) promulgated by the telecommunication industry association (TIA) and used primarily within cellular telecommunications systems. The IS-95 standard incorporates code division multiple access (CDMA) signal modulation techniques to conduct multiple communications simultaneously over the same RF bandwidth. When combined with comprehensive power control, conducting multiple communications over the same bandwidth increases the total number of calls and other communications that can be conducted in a wireless communication system by, among other things, increasing the frequency reuse in comparison to other wireless telecommunication technologies. The use of CDMA techniques in a multiple access communication system is disclosed in US. Patent No. 4,901,307, entitled "SPREAD SPECTRUM COMMUNICATION SYSTEM USING SATELLITE OR TERRESTRIAL REPEATERS", and U.S. Patent No. 5,103,459, entitled "SYSTEM AND METHOD FOR GENERATING SIGNAL WAVEFORMS IN A CDMA CELLULAR TELEPHONE SYSTEM", both of which are assigned to the assignee of the present invention.

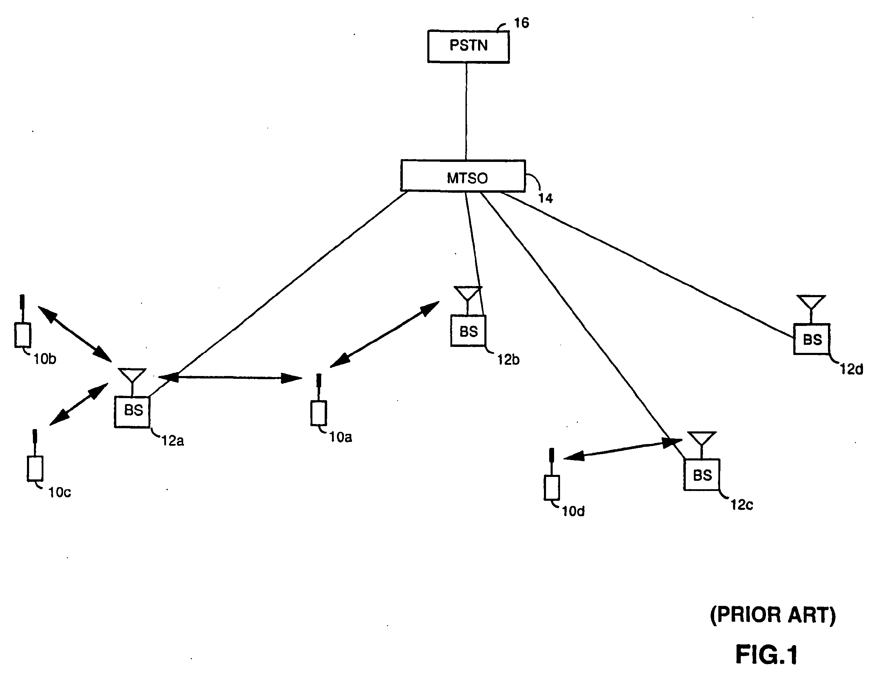

**FIG. 1** provides a highly simplified illustration of a cellular telephone system configured in accordance with the use of the IS-95 standard. During operation, a set of subscriber units **10a - d** conduct wireless communication by establishing one or more RF interfaces with one or more base stations **12a - d** using CDMA modulated RF signals. Each RF interface between a base station **12** and a subscriber unit **10** is comprised of a forward link signal transmitted from the base station **12,** and a reverse link signal transmitted from the subscriber unit Using these RF interfaces, a communication with another user is generally conducted by way of mobile telephone switching office (MTSO) **14** and public switch telephone network (PSTN) **16**. The links between base stations **12.** MTSO 14 and PSTN 16 are usually formed via wire line connections, although the use of additional RF or microwave links is also known.

In accordance with the IS-95 standard each subscriber unit **10** transmits user data via a single channel, non-coherent, reverse link signal at a maximum data rate of 9.6 or 14.4 kbits/sec depending on which rate set from a set of rate sets is selected. A non-coherent link is one in which phase information is not utilized by the received system. A coherent link is one in which the receiver exploits knowledge of the carrier signals phase during processing. The phase information typically takes the form of a pilot signal, but can also be estimated from the data transmitted. The IS-95 standard calls for a set of sixty four Walsh codes, each comprised of sixty four chips, to be used for the forward link.

The use of a single channel, non-coherent, reverse link signal having a maximum data rate of 9.6 of 14.4 kbits/sec as specified by IS-95 is well suited for a wireless cellular telephone system in which the typical communication involves the transmission of digitized voice or lower rate digital data such a facsimile. A non-coherent reverse link was selected because, in a system in which up to 80 subscriber units **10** may communicate with a base station **12** for each 1.2268 MHz of bandwidth allocated, providing the necessary pilot data in the transmission from each subscriber unit **10** would substantially increase the degree to which a set of subscriber units **10** interfere with one another. Also, at data rates of 9.6 or 14.4 kbits/sec, the ratio of the transmit power of any pilot data to the user data would be significant, and therefore also increase inter-subscriber unit interference. The use of a single channel reverse link signal was chosen because engaging in only one type of communication at a time is consistent with the, use of wireline telephones, the paradigm on which current wireless cellular communications is based. Also, the complexity of processing a single channel is less than that associated with processing multiple channels.

As digital communications progress, the demand for wireless transmission of data for applications such as interactive file browsing and video teleconferencing is anticipated to increase substantially. This increase will transform the way in which wireless communications systems are used, and the conditions under which the associated RF interfaces are conducted. In particular, data will be transmitted at higher maximum rates and with a greater variety of possible rates. Also, more reliable transmission may become necessary as errors in the transmission of data are less tolerable than errors in the transmission of audio information. Additionally, the increased number of data types will create a need to transmit multiple types of data simultaneously. For example, it may be necessary to exchange a data file while maintaining an audio or video interface. Also, as the rate of transmission from a subscriber unit increases the number of subscriber units **10** communicating with a base station **12** per amount of RF bandwidth will decrease, as the higher data transmission rates will cause the data processing capacity of the base station to be reached with fewer subscriber units **10**. In some instances, the current IS-95 reverse link may not be ideally suited for all these changes. Therefore, the present invention is related to providing a higher data rate, bandwidth efficient, CDMA interface over which multiple types of communication can be performed.

PCT Publication No. WO 97/47098, International Publication date December 11, 1997, discloses a method and apparatus for high rate CDMA wireless communication in which a set of individually gain adjusted subscriber channels are formed via the use of a set of orthogonal sub-channel codes having a small number of PN spreading chips per orthogonal waveform period.

### SUMMARY OF THE INVENTION

The present invention is defined in the appended claims.

In one aspect the invention provides a subscriber unit or other transmitter for use in a wireless communication system, the subscriber unit comprising: plural information sources of information data; an encoder for encoding the information data; plural control sources of control data; and a modulator for modulating encoded information data and the control data from one or more of the plural control sources with respective different modulating codes for transmission on a carrier signal, wherein the modulator is arranged to combine encoded information data from one information source with the encoded control data before the same is output for transmission.

In another aspect the invention provides a base station or other receiver for use in a wireless communication system, the base station comprising: a receiver for receiving a carrier signal and removing therefrom encoded information data from plural information sources modulated with respective different modulating codes and control data from plural control sources with the one or more of the control data being modulated with a respective different modulating code and with the encoded information data from one information source being combined with the encoded control data; a demodulator for demodulating the encoded information data and the control data from their respective different modulating codes; and a decoder for decoding the encoded information and control data.

In a further aspect the invention provides a method for transmitting control data, fundamental data, and supplemental data from a first subscriber unit in a set of subscriber units to a base station in communication with the set of subscriber units comprising: a) modulating the supplemental data with a first Walsh code; b) modulating the fundamental data with a second Walsh code; and c) modulating the control data with a third Walsh code, where said first Walsh code is shorter than said second Walsh code, and said second Walsh code is shorter than said third Walsh code.

In another aspect the invention provides a method of transmitting data from a subscriber unit for use in a wireless communication system, the method comprising: acquiring information data from plural information sources; encoding the information data; acquiring control data from plural control sources; and modulating the encoded information data and the control data from one or more of the plural control sources with respective different modulating codes for transmission on a carrier signal, wherein the encoded information data from one information source is combined with the encoded control data before the same is output for transmission.

In accordance with one embodiment of the invention, a set of individually gain adjusted subscriber channels are formed via the use of a set of orthogonal subchannel codes having a small number of PN spreading chips per orthogonal waveform period. Data to be transmitted via one of the transmit channels is low code rate error correction encoded and sequence repeated before being modulated with one of the subchannel codes, gain adjusted, and summed with data modulated using the other subchannel codes. The resulting summed data is modulated using a user long code and a pseudorandom spreading code (PN code) and upconverted for transmission. The use of the short orthogonal codes provides interference suppression while still allowing extensive error correction coding and repetition for time diversity to overcome the Raleigh fading commonly experienced in terrestrial wireless systems. In the exemplary embodiment of the invention provided, the set of sub-channel codes are comprised of four Walsh codes, each orthogonal to the remaining set and four chips in duration. The use of a small number (e.g. four) sub-channels is preferred as it allows shorter orthogonal codes to be used, however, the use of a greater number of channels and therefore longer codes is consistent with the invention. In another embodiment of the invention the length, or number of chips, in each channel code is different to further reduced the peak-to-average transmit power.

In a preferred exemplary embodiment of the invention, pilot data is transmitted via a first one of the transmit channels and power control data transmitted via a second transmit channel. The remaining two transmit channels are used for transmitting non-specified digital data including user data or signaling data, or both. In an exemplary embodiment, one of the two non-specified transmit channels is configured for BPSK modulation and transmission over the quadrature channel.

### BRIEF DESCRIPTION OF THE DRAWINGS

The features, objects, and advantages of the present invention will become more apparent from the detailed description set forth below of an embodiment of the invention when taken in conjunction with the drawings in which like reference characters identify correspondingly throughout and wherein:
**FIG. 1** is a block diagram of cellular telephone system;
**FIG. 2** is a block diagram of a subscriber unit and base station configured in accordance with an exemplary embodiment of the invention;
**FIG. 3** is a block diagram of a BPSK channel encoder and a QPSK channel encoder configured in accordance with the exemplary embodiment of the invention;
**FIG. 4** is a block diagram of a transmit signal processing system configured in accordance with the exemplary embodiment of the invention;
**FIG. 5** is a block diagram of a receive processing system configured in accordance with the exemplary embodiment of the invention;
**FIG. 6** is a block diagram of a finger processing system configured in accordance with one embodiment of the invention;
**FIG. 7** is a block diagram of a BPSK channel decoder and a QPSK channel decoder configured in accordance with the exemplary embodiment of the invention; and
**FIG. 8** is a block diagram of a transmit signal processing system configured in accordance with a second exemplary embodiment of the invention;
**FIG. 9** is a block diagram of a finger processing system configured in accordance with one embodiment of the invention;
**FIG. 10** is a block diagram of a transmit signal processing system configured in accordance with another embodiment of the invention;
**FIG. 11** is a block diagram of the coding performed for the fundamental channel when configured in accordance with one embodiment of the invention;
**FIG. 12** is a block diagram of the coding performed for the fundamental channel when configured in accordance with one embodiment of the invention;
**FIG. 13** is a block diagram of the coding performed for the supplemental channel when configured in accordance with one embodiment of the invention; and
**FIG. 14** is a block diagram of the coding performed for the control channel when configured in accordance with one embodiment of the invention.

### DETAILED DESCRIPTION OF THE PREFERRED EMBODIMENTS

A novel and improved method and apparatus for high rate CDMA wireless communication is described in the context of the reverse link transmission portion of a cellular telecommunications system. While the invention may be adapted for use within the multipoint-to-point reverse link transmission of a cellular telephone system, the present invention is equally applicable to forward link transmissions. In addition, many other wireless communication systems will benefit by incorporation of the invention, including satellite based wireless communication systems, point to point wireless communication systems, and systems transmitting radio frequency signals via the use of co-axial or other broadband cables.

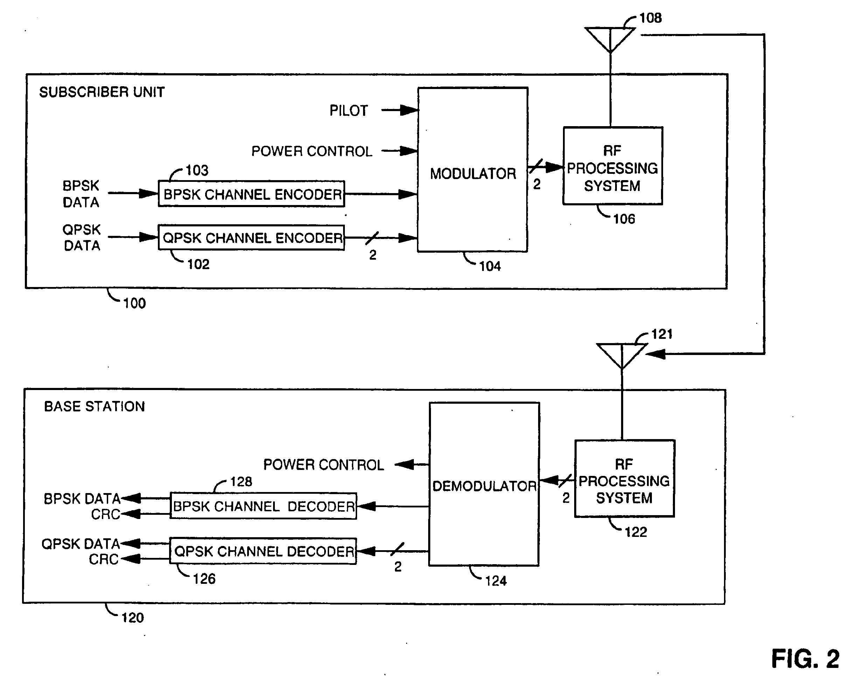

**FIG. 2** is a block diagram of receive and transmit systems configured as a subscriber unit **100** and a base station **120.** A first set of data (BPSK data) is received by BPSK channel encoder **103,** which generates a code symbol stream configured for performing BPSK modulation that is received by modulator **104.** A second set of data (QPSK data) is received by QPSK channel encoder **102,** which generates a code symbol stream configured for performing QPSK modulation that is also received by modulator **104.** Modulator **104** also receives power control data and pilot data, which are modulated along with the BPSK and QPSK encoded data in accordance with code division multiple access (CDMA) techniques to generate a set of modulation symbols received by RF processing system **106.** RF processing system **106** filters and upconverts the set of modulation symbols to a carrier frequency for transmission to the base station **120** using antenna **108.** While only one subscriber unit **100** is shown, multiple subscriber units may communicate with base station **120.**

Within base station **120,** RF processing system **122** receives the transmitted RF signals by way of antenna **121** and performs bandpass filtering, downconversion to baseband, and digitization. Demodulator **124** receives the digitized signals and performs demodulation in accordance with CDMA techniques to produce power control, BPSK, and QPSK soft decision data. BPSK channel decoder **128** decodes the BPSK soft decision data received from demodulator **124** to yield a best estimate of the BPSK data, and QPSK channel decoder **126** decodes the QPSK soft decision data received by demodulator **124** to produce a best estimate of the QPSK data. The best estimate of first and second set of data is then available for further processing or forwarding to a next destination, and the received power control data used either directly, or after decoding, to adjust the transmit power of the forward link channel used to transmit data to subscriber unit **100.**

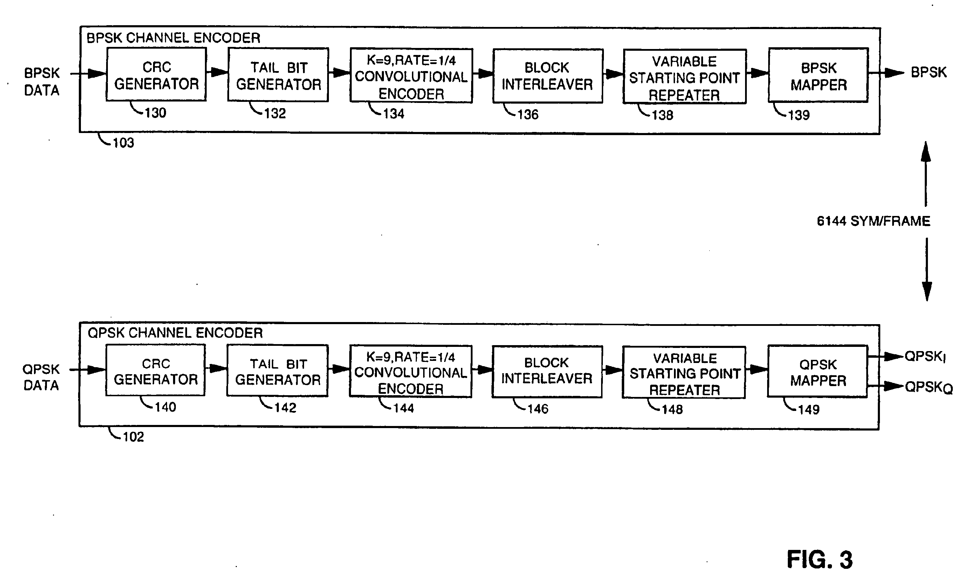

**FIG. 3** is a block diagram of BPSK channel encoder **103** and QPSK channel encoder **102** when configured in accordance with the exemplary embodiment of the invention. Within BPSK channel encoder **103** the BPSK data is received by CRC check sum generator **130** which generates a check sum for each 20 ms frame of the first set of data. The frame of data along with the CRC check sum is received by tail bit generator **132** which appends tail bits comprised of eight logic zeros at the end of each frame to provide a known state at the end of the decoding process. The frame including the code tail bits and CRC check sum is then received by convolutional encoder **134** which performs, constraint length (K) 9, rate (R) 1/4 convolutional encoding thereby generating code symbols at a rate four times the encoder input rate (E_{R}). In an alternative, other encoding rates are performed including rate 1/2, but the use of rate 1/4 is preferred due to its optimal complexity-performance characteristics. Block interleaver **136** performs bit interleaving on the code symbols to provide time diversity for more reliable transmission in fast fading environments. The resulting interleaved symbols are received by variable starting point repeater **138,** which repeats the interleaved symbol sequence a sufficient number of times N_{R} to provide a constant rate symbol stream, which corresponds to outputting frames having a constant number of symbols. Repeating the symbol sequence also increases the time diversity of the data to overcome fading. In the exemplary embodiment, the constant number of symbols is equal to 6,144 symbols for each frame making the symbol rate 307.2 kilosymbols per second (ksps). Also, repeater **138** uses a different starting point to begin the repetition for each symbol sequence. When the value of N_{R} necessary to generate 6,144 symbols per frame is not an integer, the final repetition is only performed for a portion of the symbol sequence. The resulting set of repeated symbols are received by BPSK mapper **139** which generates a BPSK code symbol stream (BPSK) of +1 and -1 values for performing BPSK modulation. In an alternative, repeater **138** is placed before block interleaver **136** so that block interleaver **136** receives the same number of symbols for each frame.

Within QPSK channel encoder **102** the QPSK data is received by CRC check sum generator 140 which generates a check sum for each 20 ms frame. The frame including the CRC check sum is received by code tail bits generator **142** which appends a set of eight tail bits of logic zeros at the end of the frame. The frame, now including the code tail bits and CRC check sum, is received by convolutional encoder **144** which performs K=9, R=1/4 convolutional encoding thereby generating symbols at a rate four times the encoder input rate (E_{R}). Block interleaver **146** performs bit interleaving on the symbols and the resulting interleaved symbols are received by variable starting point repeater **148.** Variable starting point repeater **148** repeats the interleaved symbol sequence a sufficient number of times N_{R} using a different starting point within the symbol sequence for each repetition to generate 12,288 symbols for each frame making the code symbol rate 614.4 kilosymbols per second (ksps). When N_{R} is not an integer, the final repetition is performed for only a portion of the symbol sequence. The resulting repeated symbols are received by QPSK mapper **149** which generates a QPSK code symbol stream configured for performing QPSK modulation comprised of an in-phase QPSK code symbol stream of +1 and -1 values (QPSK_{I}), and a quadrature-phase QPSK code symbol stream of +1 and -1 values (QPSK_{Q}). In an alternative, repeater **148** is placed before block interleaver **146** so that block interleaver **146** receives the same number of symbols for each frame.

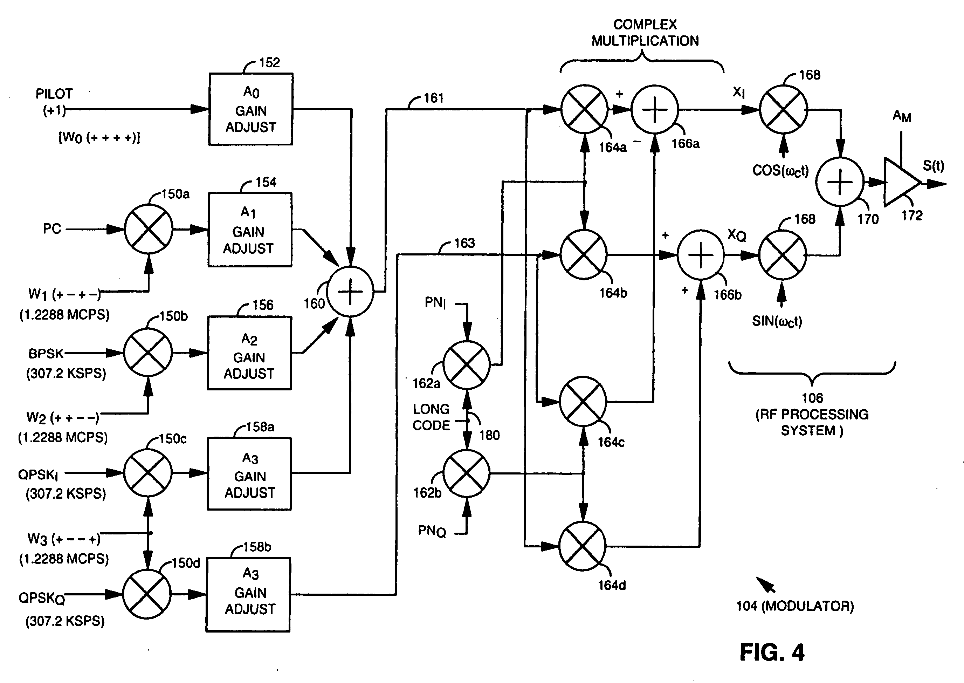

**FIG. 4** is a block diagram of modulator **104** of **FIG. 2** configured in accordance with the exemplary embodiment of the invention. The BPSK symbols from BPSK channel encoder **103** are each modulated by Walsh code W₂ using a multiplier **150b,** and the QPSK_{I} and QPSK_{Q} symbols from QPSK channel encoder **102** are each modulated with Walsh code W₃ using multipliers **150c** and **154d.** The power control data (PC) is modulated by Walsh code W₁ using multiplier **150a.** Gain adjust **152** receives pilot data (PILOT), which preferably is comprised of the logic level associated with positive voltage, and adjusts the amplitude according to a gain adjust factor A₀. The PILOT signal provides no user data but rather provides phase and amplitude information to the base station so that it can coherently demodulate the data carried on the remaining sub-channels, and scale the soft-decision output values for combining. Gain adjust **154** adjusts the amplitude of the Walsh code W₁ modulated power control data according to gain adjust factor A₁, and gain adjust **156** adjusts the amplitude of the Walsh code W₂ modulated BPSK channel data according amplification variable A₂. Gain adjusts **158a** and **b** adjust the amplitude of the in-phase and quadrature-phase Walsh code W₃ modulated QPSK symbols respectively according to gain adjust factor A₃. The four Walsh codes used in the preferred embodiment of the invention are shown in Table I.

**Table I.**

| Walsh Code | Modulation Symbols |
|---|---|
| W₀ | + + + + |
| W₁ | + - + - |
| W₂ | + + - - |
| W₃ | + - - + |

It will be apparent to one skilled in the art that the W₀ code is effectively no modulation at all, which is consistent with processing of the pilot data shown. The power control data is modulated with the W₁ code, the BPSK data with the W₂ code, and the QPSK data with the W₃ code. Once modulated with the appropriate Walsh code, the pilot, power control data, and BPSK data are transmitted in accordance with BPSK techniques, and the QPSK data (QPSK_{I} and QPSK_{Q}) in accordance with QPSK techniques as described below. It should also be understood that it is not necessary that every orthogonal channel be used, and that the use of only three of the four Walsh codes where only one user channel is provided is employed in an alternative embodiment of the invention.

The use of short orthogonal codes generates fewer chips per symbol, and therefore allows for more extensive coding and repetition when compared to systems incorporating the use of longer Walsh codes. This more extensive coding and repetition provides protection against Raleigh fading which is a major source of error in terrestrial communication systems. The use of other numbers of codes and code lengths is consistent with the present invention, however, the use of a larger set of longer Walsh codes reduces this enhanced protection against fading. The use of four chip codes is considered optimal because four channels provides substantial flexibility for the transmission of various types of data as illustrated below while also maintaining short code length.

Summer **160** sums the resulting amplitude adjusted modulation symbols from gain adjusts **152, 154, 156** and **158a** to generate summed modulation symbols **161.** PN spreading codes PN_{I} and PN_{Q} are spread via multiplication with long code 180 using multipliers **162a** and **b.** The resulting pseudorandom code provided by multipliers **162a** and **162b** are used to modulate the summed modulation symbols **161,** and gain adjusted quadrature-phase symbols QPSK_{Q} **163,** via complex multiplication using multipliers **164a-d** and summers **166a** and **b.** The resulting in-phase term X_{I} and quadrature-phase term X_{Q} are then filtered (filtering not shown), and upconverted to the carrier frequency within RF processing system **106** shown in a highly simplified form using multipliers **168** and an in-phase and a quadrature-phase sinusoid. An offset QPSK upconversion could also be used in an alternative embodiment of the invention. The resulting in-phase and quadrature-phase upconverted signals are summed using summer **170** and amplified by master amplifier **172** according to master gain adjust A_{M} to generate signal s(t) which is transmitted to base station 120. In the preferred embodiment of the invention, the signal is spread and filtered to a 1.2288 MHz bandwidth to remain compatible with the bandwidth of existing CDMA channels.

By providing multiple orthogonal channels over which data may be transmitted, as well as by using variable rate repeaters that reduce the amount of repeating N_{R} performed in response to high input data rates, the above described method and system of transmit signal processing allows a single subscriber unit or other transmit system to transmit data at a variety of data rates. In particular, by decreasing the rate of repetition N_{R} performed by variable starting point repeaters **138** or **148** of **FIG. 3,** an increasingly higher encoder input rate E_{R} can be sustained. In an alternative embodiment of the invention rate 1/2 convolution encoding is performed with the rate of repetition N_{R} increased by two. A set of exemplary encoder rates E_{R} supported by various rates of repetition N_{R} and encoding rates R equal to 1/4 and 1/2 for the BPSK channel and the QPSK channel are shown in Tables II and III respectively.

**Table II. BPSK Channel**

| Label | E_{R,BPSK} (bps) | Encoder Out R=1/4 (bits/frame) | N_{R,R=1/4} (Repetition Rate, R=1/4) | Encoder Out R=1/2 (bits/frame) | N_{R,R=1/2} (Repetition Rate, R=1/2) |
|---|---|---|---|---|---|
| High Rate-72 | 76,800 | 6,144 | 1 | 3,072 | 2 |
| High Rate-64 | 70,400 | 5,632 | 11/11 | 2,816 | 22/11 |
| | 51,200 | 4,096 | 1 1/2 | 2,048 | 3 |
| High Rate-32 | 38,400 | 3,072 | 2 | 1,536 | 4 |
| | 25,600 | 2,048 | 3 | 1,024 | 6 |
| RS2-Full Rate | 14,400 | 1,152 | 5 1/3 | 576 | 102/3 |
| RS1-Full Rate | 9,600 | 768 | 8 | 384 | 16 |
| NULL | 850 | 68 | 90 6/17 | 34 | 180 12/17 |

**Table III. QPSK Channel**

| Label | E_{R,QPSK} (bps) | Encoder Out R=1/4 (bits/frame) | N_{R,R=1/4} (Repetition Rate, R=1/4) | Encoder Out R=1/2 (bits/frame) | N_{R,R=1/2} (Repetition Rate, R=1/2) |
|---|---|---|---|---|---|
| | 153,600 | 12,288 | 1 | 6,144 | 2 |
| High Rate-72 | 76,800 | 6,144 | 2 | 3,072 | 4 |
| High Rate-64 | 70,400 | 5,632 | 22/11 | 2,816 | 4 4/11 |
| | 51,200 | 4,096 | 3 | 2,048 | 6 |
| High Rate-32 | 38,400 | 3,072 | 4 | 1,536 | 8 |
| | 25,600 | 2,048 | 6 | 1,024 | 12 |
| RS2-Full Rate | 14,400 | 1,152 | 10 2/3 | 576 | 21 1/3 |
| RS1-Full Rate | 9,600 | 768 | 16 | 384 | 32 |
| NULL | 850 | 68 | 180 12/17 | 34 | 361 7/17 |

Tables II and III show that by adjusting the number of sequence repetitions N_{R}, a wide variety of data rates can be supported including high data rates, as the encoder input rate E_{R} corresponds to the data transmission rate minus a constant necessary for the transmission of CRC, code tail bits and any other overhead information. As also shown by tables II and III, QPSK modulation may also be used to increase the data transmission rate. Rates expected to be used commonly are provided labels such as "High Rate-72" and "High Rate-32." Those rates noted as High Rate-72, High Rate-64, and High Rate-32 have traffic rates of 72, 64 and 32 kbps respectively, plus multiplexed in signaling and other control data with rates of 3.6, 5.2, and 5.2 kbps respectively. Rates RS1-Full Rate and RS2-Full Rate correspond to rates used in IS-95 compliant communication systems, and therefore are also expected to receive substantial use for purposes of compatibility. The null rate is the transmission of a single bit and is used to indicate a frame erasure, which is also part of the IS-95 standard.

The data transmission rate may also be increased by simultaneously transmitting data over two or more of the multiple orthogonal channels performed either in addition to, or instead of, increasing the transmission rate via reduction of the repetition rate N_{R}. For example, a multiplexer (not shown) could split a single data source into a multiple data sources to be transmitted over multiple data sub-channels. Thus, the total transmit rate can be increased via either transmission over a particular channel at higher rates, or multiple transmission performed simultaneously over multiple channels, or both, until the signal processing capability of the receive system is exceeded and the error rate becomes unacceptable, or the maximum transmit power of the of the transmit system power is reached.

Providing multiple channels also enhances flexibility in the transmission of different types of data. For example, the BPSK channel may be designated for voice information and the QPSK channel designated for transmission of digital data. This embodiment could be more generalized by designating one channel for transmission of time sensitive data such as voice at a lower data rate, and designating the other channel for transmission of less time sensitive data such as digital files. In this embodiment interleaving could be performed in larger blocks for the less time sensitive data to further increase time diversity. In another embodiment of the invention, the BPSK channel performs the primary transmission of data, and the QPSK channel performs overflow transmission. The use of orthogonal Walsh codes eliminates or substantially reduces any interference among the set of channels transmitted from a subscriber unit, and thus minimizes the transmit energy necessary for their successful reception at the base station.

To increase the processing capability at the receive system, and therefore increase the extent to which the higher transmission capability of the subscriber unit may be utilized, pilot data is also transmitted via one of the orthogonal channels. Using the pilot data, coherent processing can be performed at the receive system by determining and removing the phase offset of the reverse link signal. Also, the pilot data can be used to optimally weigh multipath signals received with different time delays before being combined in a rake receiver. Once the phase offset is removed, and the multipath signals properly weighted, the multipath signals can be combined decreasing the power at which the reverse link signal must be received for proper processing. This decrease in the required receive power allows greater transmissions rates to be processed successfully, or conversely, the interference between a set of reverse link signals to be decreased. While some additional transmit power is necessary for the transmission of the pilot signal, in the context of higher transmission rates the ratio of pilot channel power to the total reverse link signal power is substantially lower than that associated with lower data rate digital voice data transmission cellular systems. Thus, within a high data rate CDMA system the E_{b}/N₀ gains achieved by the use of a coherent reverse link outweigh the additional power necessary to transmit pilot data from each subscriber unit.

The use of gain adjusts **152 - 158** as well as master amplifier **172** further increases the degree to which the high transmission capability of the above described system can be utilized by allowing the transmit system to adapt to various radio channel conditions, transmission rates, and data types. In particular, the transmit power of a channel that is necessary for proper reception may change over time, and with changing conditions, in a manner that is independent of the other orthogonal channels. For example, during the initial acquisition of the reverse link signal the power of the pilot channel may need to be increased to facilitate detection and synchronization at the base station. Once the reverse link signal is acquired, however, the necessary transmit power of the pilot channel would substantially decrease, and would vary depending on various factors including the subscriber units rate of movement. Accordingly, the value of the gain adjust factor Aₒ would be increased during signal acquisition, and then reduced during an ongoing communication. In another example, when information more tolerable of error is being transmitted via the forward link, or the environment in which the forward link transmission is taking place is not prone to fade conditions, the gain adjust factor A₁ may be reduced as the need to transmit power control data with a low error rate decreases. Preferably, whenever power control adjustment is not necessary the gain adjust factor A₁ is reduced to zero.

In another embodiment of the invention, the ability to gain adjust each orthogonal channel or the entire reverse link signal is further exploited by allowing the base station **120** or other receive system to alter the gain adjust of a channel, or of the entire reverse link signal, via the use of power control commands transmitted via the forward link signal. In particular, the base station may transmit power control information requesting the transmit power of a particular channel or the entire reverse link signal be adjusted. This is advantageous in many instances including when two types of data having different sensitivity to error, such as digitized voice and digital data, are being transmitted via the BPSK and QPSK channels. In this case, the base station 120 would establish different target error rates for the two associated channels. If the actual error rate of a channel exceeded the target error rate, the base station would instruct the subscriber unit to reduce the gain adjust of that channel until the actual error rate reached the target error rate. This would eventually lead to the gain adjust factor of one channel being increased relative to the other. That is, the gain adjust factor associated with the more error sensitive data would be increased relative to the gain adjust factor associated with the less sensitive data. In other instances, the transmit power of the entire reverse link may require adjustment due to fade conditions or movement of the subscriber unit 100. In these instances, the base station **120** can do so via transmission of a single power control command.

Thus, by allowing the gain of the four orthogonal channels to be adjusted independently, as well as in conjunction with one another, the total transmit power of the reverse link signal can be kept at the minimum necessary for successful transmission of each data type, whether it is pilot data, power control data, signaling data, or different types of user data. Furthermore, successful transmission can be defined differently for each data type. Transmitting with the minimum amount of power necessary allows the greatest amount of data to be transmitted to the base station given the finite transmit power capability of a subscriber unit, and also reduces the interfere between subscriber units. This reduction in interference increases the total communication capacity of the entire CDMA wireless cellular system.

The power control channel used in the reverse link signal allows the subscriber unit to transmit power control information to the base station at a variety of rates including a rate of 800 power control bits per second. In the preferred embodiment of the invention, a power control bit instructs the base station to increase or decrease the transmit power of the forward link traffic channel being used to transmit information to the subscriber unit. While it is generally useful to have rapid power control within a CDMA system, it is especially useful in the context of higher data rate communications involving data transmission, because digital data is more sensitive to errors, and the high transmission causes substantial amounts of data to be lost during even brief fade conditions. Given that a high speed reverse link transmission is likely to be accompanied by a high speed forward link transmission, providing for the rapid transmission of power control over the reverse link further facilitates high speed communications within CDMA wireless telecommunications systems.

In an alternative exemplary embodiment of the invention a set of encoder input rates E_{R} defined by the particular N_{R} are used to transmit a particular type of data. That is, data may be transmitted at a maximum encoder input rate E_{R} or at a set of lower encoder input rates E_{R}, with the associated N_{R} adjusted accordingly. In the preferred implementation of this embodiment, the maximum rates corresponds to the maximum rates used in IS-95 compliant wireless communication system, referred to above with respect to Tables II and III as RS1-Full Rate and RS2-Full Rate, and each lower rate is approximately one half the next higher rate, creating a set of rates comprised of a full rate, a half rate, a quarter rate, and an eighth rate. The lower data rates are preferable generated by increasing the symbol repetition rate N_{R} with value of N_{R} for rate set one and rate set two in a BPSK channel provided in Table IV.

**Table IV. RS1 and RS2 Rate Sets in BPSK Channel**

| Label | E_{R},QPSK (bps) | Encoder Out R=1/4 (bits/frame) | N_{R,R=1/4} (Repetition Rate, R=1/4) | Encoder Out R=1/2 (bits/frame) | N_{R,R=1/2} (Repetition Rate, R=1/2) |
|---|---|---|---|---|---|
| RS2-Full Rate | 14,400 | 1,152 | 51/3 | 576 | 10 2/3 |
| RS2-Half Rate | 7,200 | 576 | 102/3 | 288 | 21 1/3 |
| RS2-Quarter Rate | 3,600 | 288 | 21 1/3 | 144 | 42 2/3 |
| RS2-Eighth Rate | 1,900 | 152 | 40 8/19 | 76 | 80 16/19 |
| RS1-Full Rate | 9,600 | 768 | 8 | 384 | 16 |
| RS1-Half Rate | 4,800 | 384 | 16 | 192 | 32 |
| RS1-Quarter Rate | 2,800 | 224 | 27 3/7 | 112 | 54 6/7 |
| RS1-Eighth Rate | 1,600 | 128 | 48 | 64 | 96 |
| NULL | 850 | 68 | 90 6/17 | 34 | 180 12/17 |

The repetition rates for a QPSK channel is twice that for the BPSK channel.

In accordance with the exemplary embodiment of the invention, when the data rate of a frame changes with respect to the previous frame the transmit power of the frame is adjusted according to the change in transmission rate. That is, when a lower rate frame is transmitted after a higher rate frame, the transmit power of the transmit channel over which the frame is being transmitted is reduced for the lower rate frame in proportion to the reduction in rate, and vice versa. For example, if the transmit power of a channel during the transmission of a full rate frame is transmit power T, the transmit power during the subsequent transmission of a half rate frame is transmit power T/2. The reduction is transmit power is preferably performed by reducing the transmit power for the entire duration of the frame, but may also be performed by reducing the transmit duty cycle such that some redundant information is "blanked out." In either case, the transmit power adjustment takes place in combination with a closed loop power control mechanism whereby the transmit power is further adjusted in response to power control data transmitted from the base station.

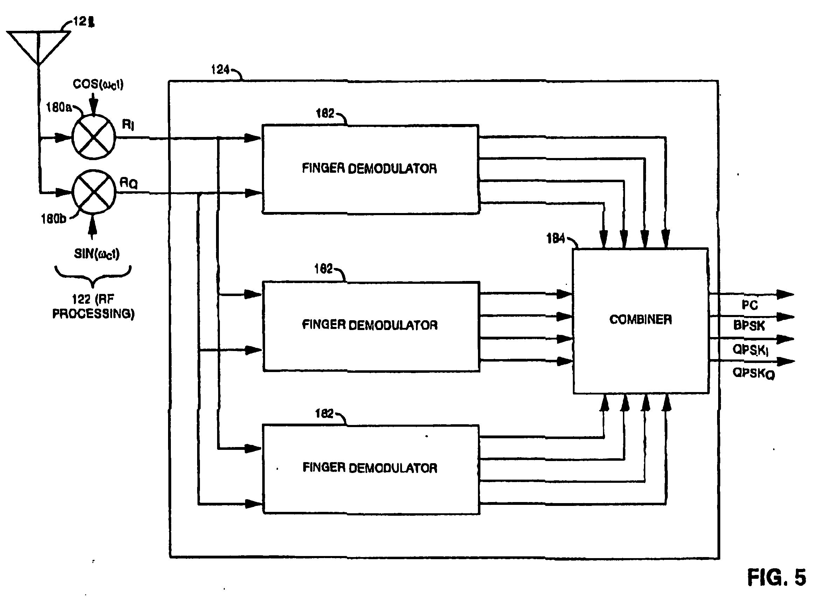

**FIG. 5** is a block diagram of RF processing system **122** and demodulator **124** of **FIG. 2** configured in accordance with the exemplary embodiment of the invention. Multipliers **180a** and **180b** downconvert the signals received from antenna **121** with an in-phase sinusoid and a quadrature phase sinusoid producing in-phase receive samples R₁ and quadrature-phase receive samples R_{Q} receptively. It should be understood that RF processing system **122** is shown in a highly simplified form, and that the signals are also match filtered and digitized (not shown) in accordance with widely known techniques. Receive samples R_{I} and R_{Q} are then applied to finger demodulators **182** within demodulator **124.** Each finger demodulator **182** processes an instance of the reverse link signal transmitted by subscriber unit **100,** if such an instance is available, where each instance of the reverse link signal is generated via multipath phenomenon. While three finger demodulators are shown, the use of alternative numbers of finger processors are consistent with the invention including the use of a single finger demodulator **182.** Each finger demodulator **182** produces a set of soft decision data comprised of power control data, BPSK data, and QPSK_{I} data and QPSK_{Q} data. Each set of soft decision data is also time adjusted within the corresponding finger demodulator **182,** although time adjustment could be performed within combiner **184** in an alternative embodiment of the invention. Combiner **184** then sums the sets of soft decision data received from finger demodulators **182** to yield a single instance of power control, BPSK, QPSK_{I} and QPSK_{Q} soft decision data.

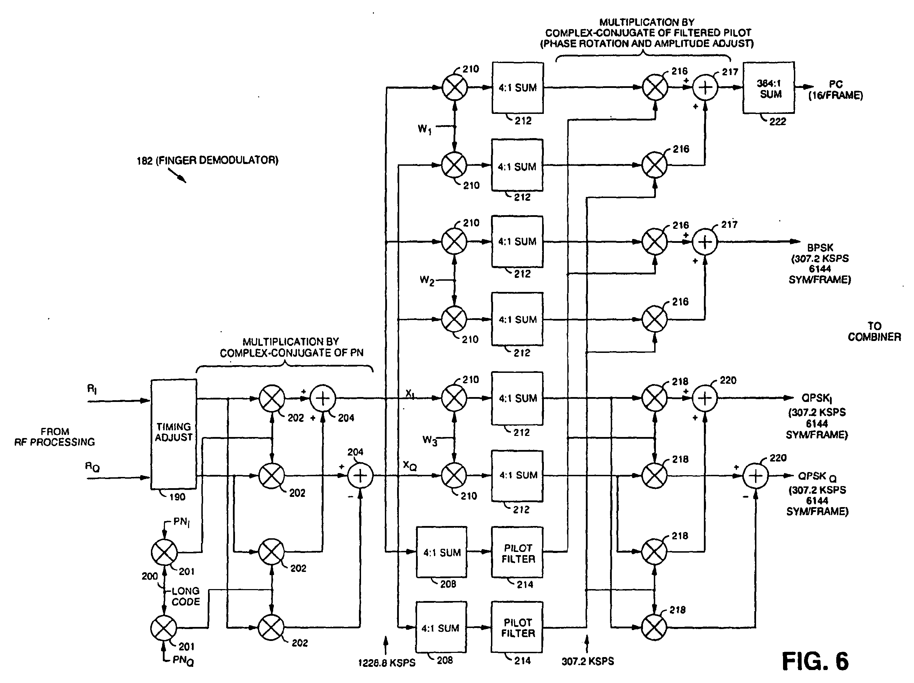

**FIG. 6** is block diagram a finger demodulator **182** of **FIG. 5** configured in accordance with the exemplary embodiment of the invention. The R₁ and R_{Q} receive samples are first time adjusted using time adjust **190** in accordance with the amount of delay introduced by the transmission path of the particular instance of the reverse link signal being processed. Long code **200** is mixed with pseudorandom spreading codes PN_{I} and PN_{Q} using multipliers **201,** and the complex conjugate of the resulting long code modulated PN_{I} and PN_{Q} spreading codes are complex multiplied with the time adjusted R_{I} and R_{Q} receive samples using multipliers **202** and summers 204 yielding terms X_{I} and X_{Q}. Three separate instances of the X_{I} and X_{Q} terms are then demodulated using the Walsh codes W₁, W₂ and W₃ respectively, and the resulting Walsh demodulated data is summed over four demodulation chips using 4 to 1 summers **212.** A fourth instance of the X_{I} and X_{Q} data is summed over four demodulation chips using summers **208,** and then filtered using pilot filters **214.** In the preferred embodiment of the invention pilot filter **214** performs averaging over a series of summations performed by summers **208,** but other filtering techniques will be apparent to one skilled in the art. The filtered in-phase and quadrature-phase pilot signals are used to phase rotate and scale the W₁, and W₂ Walsh code demodulated data in accordance with BPSK modulated data via complex conjugate multiplication using multipliers **216** and adders **217** yielding soft decision power control and BPSK data. The W₃ Walsh code modulated data is phase rotated using the in-phase and quadrature-phase filtered pilot signals in accordance with QPSK modulated data using multipliers **218** and adders **220,** yielding soft decision QPSK data. The soft decision power control data is summed over 384 modulation symbols by **384** to 1 summer **222** yielding power control soft decision data. The phase rotated W₂ Walsh code modulated data, the W₃ Walsh code modulated data, and the power control soft decision data are then made available for combining. In an alternative embodiment of the invention, encoding and decoding is performed on the power control data as well.

In addition to providing phase information the pilot may also be used within the receive system to facilitate time tracking. Time tracking is performed by also processing the received data at one sample time before (early), and one sample time after (late), the present receive sample being processed. To determine the time that most closely matches the actual arrival time, the amplitude of the pilot channel at the early and late sample time can be compared with the amplitude at the present sample time to determine that which is greatest. If the signal at one of the adjacent sample times is greater than that at the present sample time, the timing can be adjusted so that the best demodulation results are obtained.

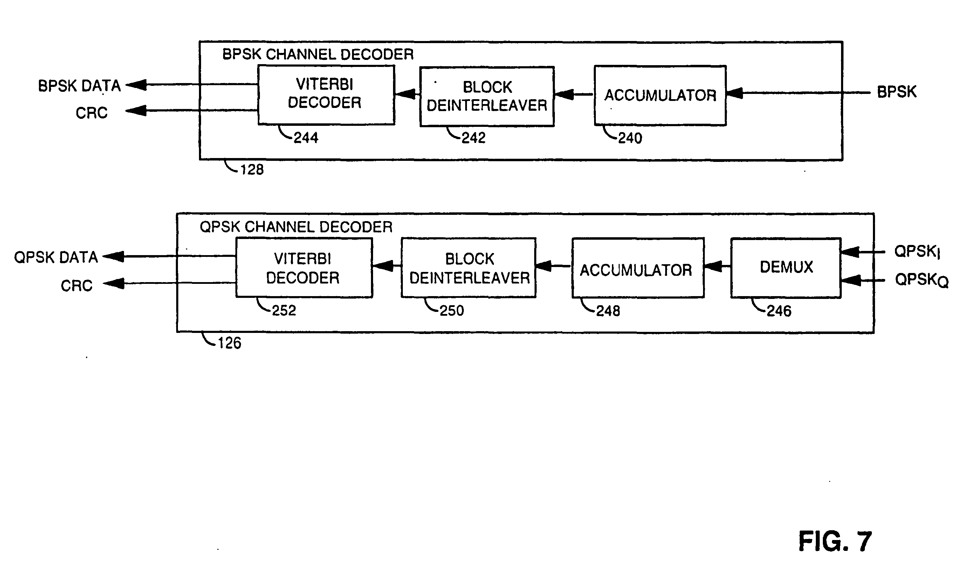

**FIG. 7** is a block diagram of BPSK channel decoder **128** and QPSK channel decoder **126 (FIG. 2)** configured in accordance with the exemplary embodiment of the invention. BPSK soft decision data from combiner **184 (FIG. 5)** is received by accumulator **240** which stores the first sequence of 6,144/N_{R} demodulation symbols in the received frame where N_{R} depends on the transmission rate of the BPSK soft decision data as described above, and adds each subsequent set of 6,144/N_{R} demodulated symbols contained in the frame with the corresponding stored accumulated symbols. Block deinterleaver **242** deinterleaves the accumulated soft decision data from variable starting point summer **240,** and Viterbi decoder **244** decodes the deinterleaved soft decision data to produce hard decision data as well as CRC check sum results. Within QPSK decoder **126** QPSK_{I} and QPSK_{Q} soft decision data from combiner **184 (FIG. 5)** are demultiplexed into a single soft decision data stream by demux **246** and the single soft decision data stream is received by accumulator **248** which accumulates every 6,144/N_{R} demodulation symbols where N_{R} depends on the transmission rate of the QPSK data. Block deinterleaver **250** deinterleaves the soft decision data from variable starting point summer **248,** and Viterbi decoder **252** decodes the deinterleaved modulation symbols to produce hard decision data as well as CRC check sum results. In the alternative exemplary embodiment described above with respect to **FIG. 3** in which symbol repetition is performed before interleaving, accumulators **240** and **248** are placed after block deinterleavers **242** and **250.** In the embodiment of the invention incorporating the use of rate sets, and therefore in which the rate of particular frame is not known, multiple decoders are employed, each operating at a different transmission rate, and then the frame associated with the transmission rate most likely to have been used is selected based on the CRC checksum results. The use of other error checking methods is consistent with the practice of the present invention.

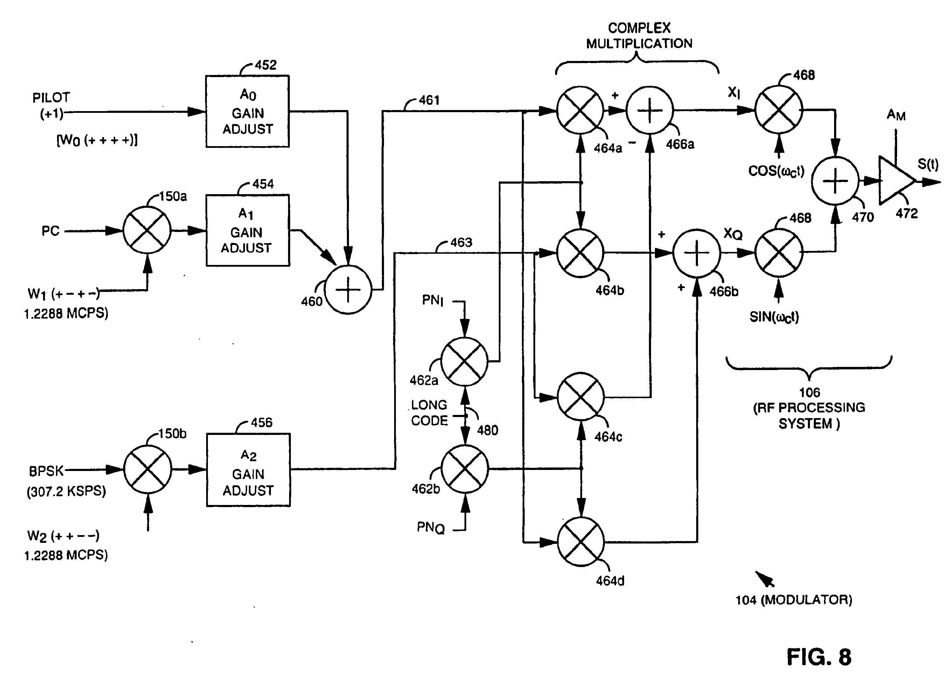

**FIG. 8** is a block diagram of modulator **104 (FIG. 2)** configured in an alternative embodiment of the invention in which a single BPSK data channel is employed. Pilot data is gain adjusted by gain adjust **452** in accordance with gain adjust factor A₀. Power control data is modulated with Walsh code W₁ by multiplier **150a** and gain adjusted by gain adjust **454** in accordance with gain adjust factor A₁. The gain adjusted pilot data and power control data are summed by summer **460** producing summed data **461.** BPSK data is modulated with Walsh code W₂ by multiplier **150b** and then gain adjusted using gain adjust **456** in accordance with gain adjust factor A₂.

In-phase pseudo random spreading code (PN_{I}) and quadrature-phase pseudo random spreading code (PN_{Q}) are both modulated with long code **480.** The resulting long code modulated PN_{I} and PN_{Q} codes are complex multiplied with the summed data **461** and the gain adjusted BPSK data from gain adjust **456** using multipliers **464a - d** and summers **466a - b** yielding terms X_{I} and X_{Q}. Terms X_{I} and X_{Q} are then upconverted with in-phase and quadrature-phase sinusoids suing multipliers **468** and the resulting upconverted signals are summed by summers **470** respectively, and amplified by amplifier **472** in accordance with amplitude factor A_{M} generating signal s(t).

The embodiment shown in **FIG. 8** differs from the other embodiments described herein in that the BPSK data is placed in the quadrature-phase channel while the pilot data and power control data are placed in the in-phase channel. In the previous embodiments of the invention described herein the BPSK data is placed the in-phase channel along with the pilot data and power control data. Placing the BPSK data in the quadrature-phase channel and the pilot and power control data in the in-phase channel reduces the peak-to-average power ratio of the reverse link signal the phases of the channels are orthogonal causing the magnitude of the sum of the two channels to vary less in response to changing data. This reduces the peak power required to maintain a given average power, and thus reduces the peak-to-average power ratio characteristic of the reverse link signal. This reduction in the peak-to-average power ratio decreases the peak power at which a reverse link signal must be received at the base station in order to sustain a given transmission rate, and therefore increases the distance a subscriber unit having a maximum transmit power may be located from the base station before it is unable to transmit a signal that can received at base station with the necessary peak power. This increases the range at which the subscriber unit can successfully conduct communication at any given data rate, or alternatively allows greater data rates to be sustained at a given distance.

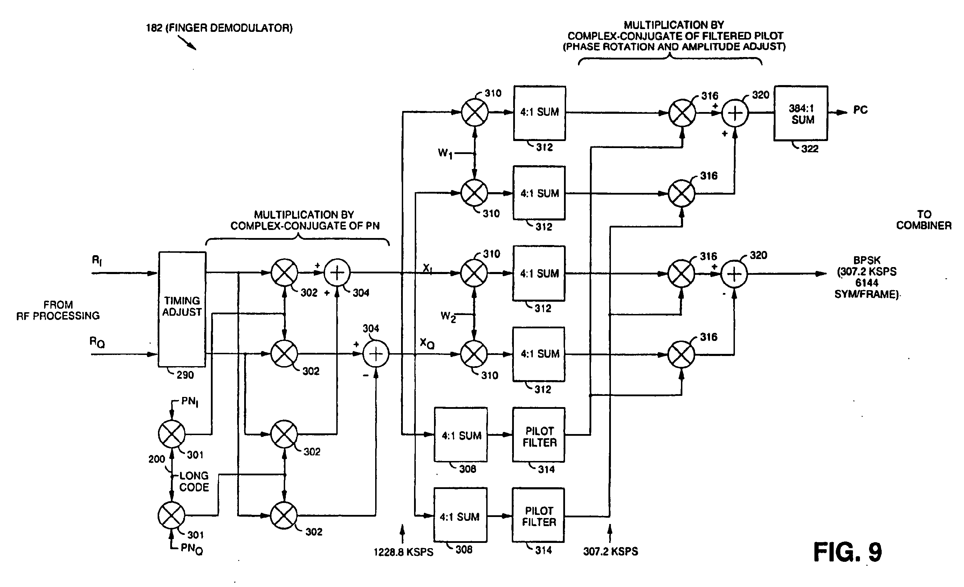

**FIG. 9** is a block diagram of finger demodulator **182** when configured in accordance with the embodiment of the invention shown in **FIG. 8.** Receive samples Rₗ and R_{Q} are time adjusted by timing adjust **290** and the PN_{I} and PN_{Q} codes are multiplied by long code **200** using multipliers **301.** The time adjusted receive samples are then multiplied by the complex conjugate of the PN_{I} and PN_{Q} codes using multipliers **302** and summers **304** yielding terms X_{I} and X_{Q}. A first and second instance of the X_{I} and X_{Q} terms are demodulated using Walsh code W₁ and Walsh code W₂ using multipliers **310** and the resulting demodulation symbols are summed in sets of four using summers **312.** A third instance of the X_{I} and XQ terms are summed over four demodulation symbols by summers **308** to generate pilot reference data. The pilot reference data is filtered by pilot filters **314** and used to phase rotate and scale the summed Walsh code modulated data using multipliers **316** and adders **320** producing BPSK soft decision data, and after being summed over 384 symbols by 384:1 summer **322,** soft decision power control data.

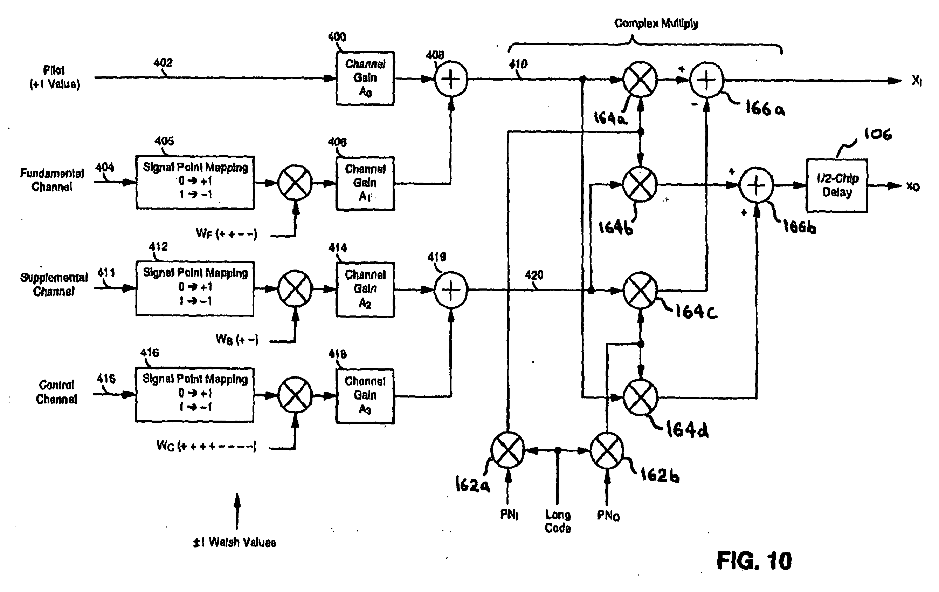

**FIG. 10** is a block diagram of a transmit system configured in accordance with still another embodiment of the invention. Channel gain **400** gain adjusts pilot channel **402** based on gain variable A₀. Fundamental channel symbols **404** are mapped into +1 and -1 values by mapper **405,** and each symbol is modulated with Walsh code W_{F} equal to +,+,-,- (where + = +1 and - = -1). The W_{F} modulated data is gain adjusted based on gain variable A₁ by gain adjust **406.** The outputs of gain adjusts **400** and **406** are summed by summer **408** yielding in-phase data **410.**

Supplemental channel symbols **411** are mapped to + and - values by mapper **412,** and each symbol is modulated with a Walsh code W_{S} equal to +,-. Gain adjust **414** adjusts the gain of the W_{S} modulated data. Control channel data **415** is mapped to + and - values by mapper **416.** Each symbol is modulated with a Walsh code W_{C} equal to +, +, +, +, -, -, -, -. The W_{C} modulated symbols are gain adjusted by gain adjust **418** based on gain variable A₃, and the output of gain adjusts **414** and **418** are summed by summer **419** to produce quadrature phase data **420.**

It should be apparent that, since the Walsh codes W_{F} and W_{S} are different lengths, and are generated at the same chip rate, the fundamental channel transmits data symbols at a rate that is half that of the supplemental channel. For similar reasons, it should be apparent that the control channel transmits data symbols at half the rate of the fundamental channel.

In-phase data **410** and quadrature phase data **420** are complex multiplied by the PN_{I} and PN_{Q} spreading codes as shown, yielding in-phase term X_{I} and quadrature phase term X_{Q}. The quadrature phase term X_{Q} is delay by 1/2 the duration of a PN spreading code chip to perform offset QPSK spreading, and then term X_{I} and term X_{Q} are upconverted in accordance the RF processing system **106** shown in **FIG. 4,** and described above.

By using Walsh codes W_{F}, W_{S} and W_{C} having different lengths as described above, this alternative provides a set of communication channels having a greater variety of rates. Additionally, the use of a shorter, two chip, Walsh code W_{S} for the supplemental channel provides an orthogonal higher data rate supplemental channel with a peak-to-average transmit power ratio that is less than that associated with the use of two channels based on 4 chip Walsh codes. This further enhances the performance of the transmit system in that a given amplifier will be able to sustain higher rate, or transmit with greater range, using the lower peak-to-average transmit power waveform.

The Walsh code allocation scheme described with regard to **FIG. 10,** can also be viewed as the allocation of eight chip Walsh space in accordance with Table VI.

**Table VI.**

| Eight-Chip Walsh Code | Channel |
|---|---|
| + + + + + + + + | Pilot |
| + - + - + - + - | Supplemental |
| + + - - + + - - | Fundamental |
| + - - + + - - + | Supplemental |
| + + + + - - - - | Control |
| + - + - - + - + | Supplemental |
| + + - - - - + + | Fundamental |
| + - - + - + + - | Supplemental |

In addition to reducing the peak to average transmit power ratio, allocating sets of eight-chip Walsh channels using a single shorter Walsh code decreases the complexity of the transmit system. For example, modulating with four eight-chip Walsh codes and summing the results requires additional circuitry and therefore would be more complex.

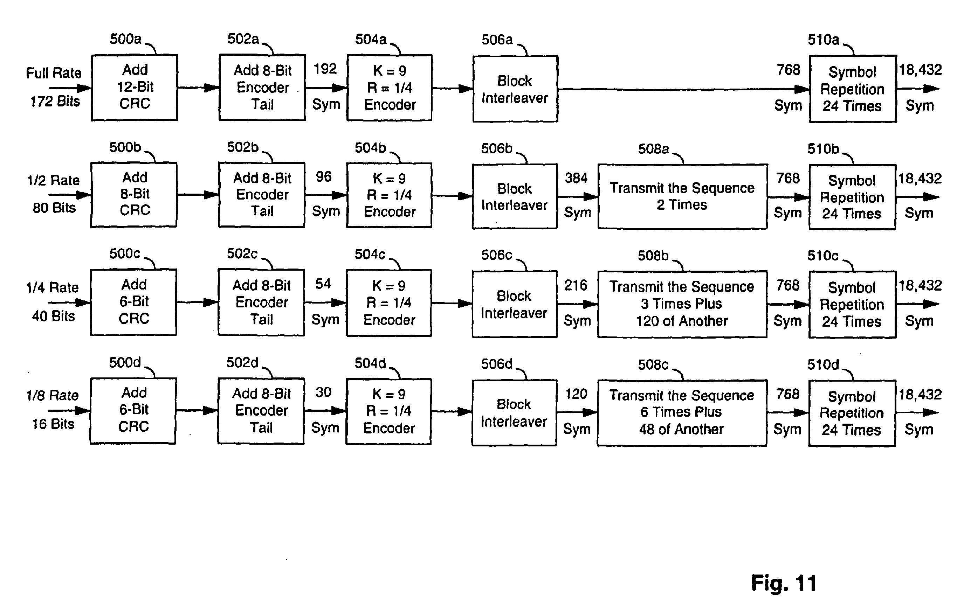

It is further contemplated that the transmission system shown in **FIG. 10** can operate at various spreading bandwidths, and therefore with the Walsh codes and spreading codes generated at various rates other than 1.2288 Mchips/second. In particular, a spreading bandwidth of 3.6864 MHz is contemplated, with a corresponding Walsh and spreading code rate of 3.6864 Mchips/second. **FIGS. 11 - 14** illustrate the coding performed for the fundamental, supplemental and control channels in accordance with the use of a 3.6864 MHz spreading bandwidth. Typically, to adjust the coding for use with a 1.2288 MHz spreading bandwidth the number of symbol repeats is reduced. This principal or adjusting the number of symbol repeats can be applied more generally to increases in the spreading bandwidth including, for example, the use of a 5 MHz spreading bandwidth. Adjustments performed to the coding for a 1.2288 MHz spreading bandwidth system other than reduction in the number of symbol repeats are particularly noted in the description of **FIGS. 11 -14** provided below.

**FIG. 11** shows the coding performed for the four rates (i.e. full, half, quarter and eight rate) that make up the IS-95 rate set 1 when performed in accordance with one embodiment of the invention. Data is supplied in 20 ms frames having the number of bits shown for each rate, and CRC check bits and eight tail bits are added by CRC checks sum generators **500a - d** and tail bit generators **502a - d.** Additionally, rate 1/4 convolutional encoding is performed for each rate by convolutional encoders **504a-d,** generating four code symbols for each data bit, CRC bit, or tail bit. The resulting frame of code symbols is block interleaved using block interleavers **506a - d,** generating the number of symbols indicated. For the lower three rates, the symbols are transmitted repeatedly by transmission repeaters **508a - c,** as indicated, causing 768 code symbols to be generated for each frame. The 768 code symbols for each rate are then repeated 24 times by symbol repeaters **510a - d** generating 18,432 code symbols per frame for each rate.

As discussed above, each code symbol in the fundamental channel is modulated with a four bit Walsh code W_{F} generated at 3,686,400 chips per second (3.6864 Mchips/second). Thus, for a 20 ms time interval (1/50th of a second) the number of Walsh and spreading code chips is 73,728, which corresponds to 4 Walsh chips for each of the 18,432 code symbol in the frame.

For a system operating at 1.2288 Mchips/second, the number of symbol repeats performed by symbol repeaters **510a-d** is reduced to eight (8). Additionally, transmission repeater **508b** repeats the sequence of symbols in the frame three (3) times, plus 120 of the symbols are transmitted a fourth time, and transmission repeater **508c** repeats the sequence of symbols in the frame six (6) times, plus 48 of the symbols are repeated a seventh time. Additionally, a fourth transmission repeater (or fourth transmission repeat step) is included for the full rate (not shown) which transmits 384 of the sequence of symbols contained in the frame a second time. These repeated transmissions all provide 768 symbols of data which, when repeated eight times by symbol repeaters **510a - d,** correspond to 6,144 symbols, which is the number of chips in a 20 ms frame at 1.2288 Mchips/second.

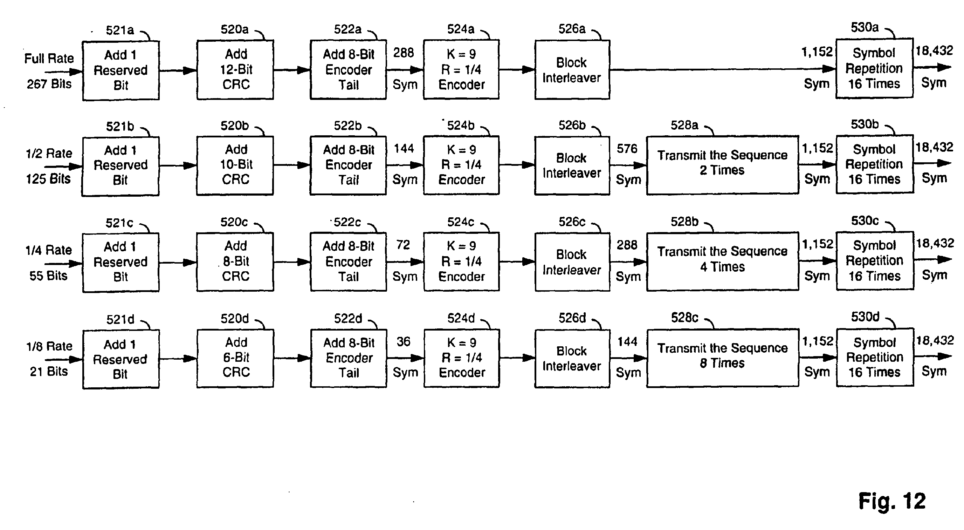

**FIG. 12** shows the coding performed for the four rates that make up IS-95 rate set 2 when performed in accordance with one embodiment of the invention. Data is supplied in 20 ms frames having the number of bits shown for each rate, and a reserve bit is added by reserve bit augmenters **521a - d** for each rate. CRC check bits and eight tail bits are also added by CRC checks sum generators **520a - d** and tail bit generators **522a - d.** Additionally, rate 1/4 convolutional encoding is performed for each rate by convolutional encoders **524a-d,** generating four code symbols for each data, CRC or tail bit. The resulting frame of code symbols is block interleaved using block interleaves **526a - d** generating the number of symbols indicated. For the lower three rates, the symbols are transmitted repeatedly by transmission repeaters **528a - c** as indicated, causing 768 code symbols to be generated for each frame. The 768 code symbols for each rate are then repeated 24 times by symbol repeaters **530a - d** generating 18,432 code symbols per frame for each rate.

For a system operating at 1.2288 MHz spreading bandwidth, the number of symbol repeats performed by symbol repeaters **530a-d** is reduced to four (4). Additionally, transmission repeater **528a** transmits the sequence of symbols in the frame two (2) times, plus **384** of the symbols are transmitted a third time. Transmission repeater **528b** repeats the sequence of symbols in the frame five (5) times, plus 96 of the symbols are transmitted a sixth time. Transmission repeater **528c** repeats the sequence of symbols in the frame ten (10) times, plus 96 of the symbols are repeated an eleventh time. Additionally, a fourth transmission repeater (or fourth transmission repeat step) is included for the full rate (not shown) which transmits 384 of the sequence of symbols contained in the frame a second time. These repeated transmissions all provide 1,536 symbols of data which, when repeated four times by symbol repeaters **530a - d,** correspond to 6,144 symbols.

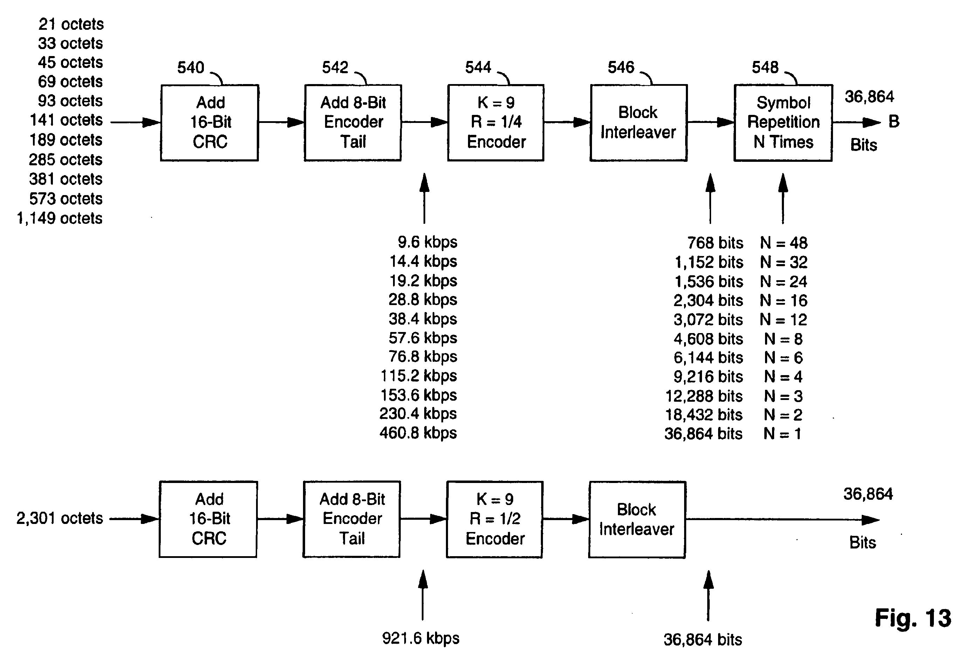

**FIG. 13** illustrates the coding performed for the supplemental channel when performed in accordance with one embodiment of the invention. Frames of data are supplied at any of the eleven rates indicated, and CRC check sum generator **540** adds 16 bits of CRC checksum data. Tail bit generator **542** adds eight bits of encoder tail data resulting in frames having the data rates shown. Convolution encoder **544** performs rate 1/4, constraint length K = 9, encoding generating four code symbols four each data, CRC or tail bit received, and block interleaver **546** performs block interleaving on each frame, and outputs the number of code symbols shown for each frame in accordance with the input frame size. Symbol repeater **548** repeats the frames N times depending on the input frame size as indicated.

The encoding for an additional twelfth rate is shown, which is performed in similar fashion to the eleven rates, with the exception that rate 1/2 encoding is performed instead of rate 1/4. Additionally, no symbol repetition is performed.

A list of frame sizes, encoder input rates, code rates and symbol repetition factors N for various chip rates that can be applied to **FIG. 13** to adjust for different chip rates (which correspond to spreading bandwidths) is provided in Table VII.

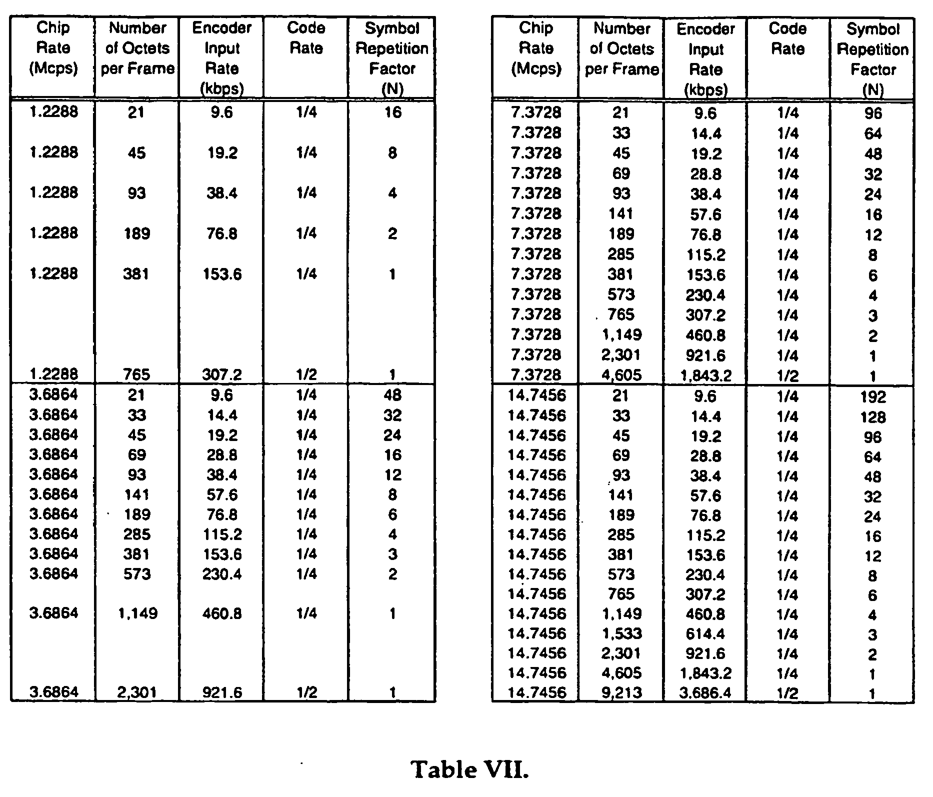

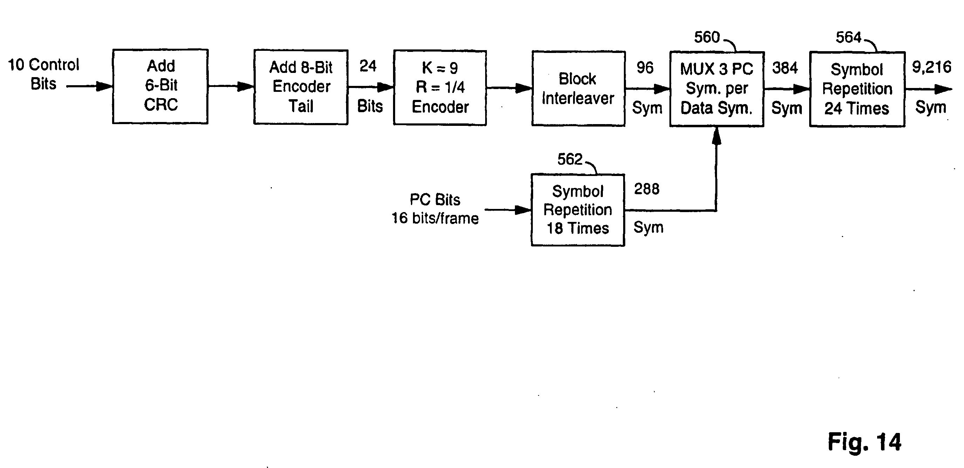

**FIG.14** is a block diagram of the processing performed for the control channel for a 3.6864 MHz spreading bandwidth system. The processing is substantially similar to that associated with the other channels, except for the addition a mux **560** and symbol repeater **562,** which operate to introduce uncoded power control bits into the code symbol stream. The power control bits are generated at a rate of 16 per frame, and repeated 18 times by symbol repeater **562** resulting in 288 power control bits per frame. The 288 power control bits are multiplexed into the frame of code symbols at a ratio of three power control bits per coded data symbol, generating 384 total symbols per frame. Symbol repeater **564** repeats the 384 bits 24 times generating 9,216 symbols per frame for an effective data rate of 500 kbits/second for the control data, and 800 kbits/second for the power control bits. The preferred processing performed for a 1.2288 MHz bandwidth system simply reduces the number of symbol repetitions performed from 24 to 8.

Thus, a multi-channel, high rate, CDMA wireless communication system has been described. The description is provided to enable any person skilled in the art to make or use the present invention. The various modifications to these embodiments will be readily apparent to those skilled in the art, and the generic principles defined herein may be applied to other embodiments without the use of the inventive faculty. Thus, the present invention is not intended to be limited to the embodiments shown herein but is to be accorded the widest scope consistent with the principles and novel features disclosed herein.

## Claims

1. A method for modulating a signal by generating data for transmission suitable for transmission from a subscriber unit to a base station in a communication system **characterised in that** the method comprises the steps of:
modulating channel encoded data from a plurality of channels with an associated code for each channel, selected from a number of associated codes, wherein each associated code is of a different length from remaining associated codes and each associated code is orthogonal to remaining associated codes, to produce a plurality of streams of modulated symbols;
combining the plurality of streams of modulated symbols into two combined streams; and
complex multiplying said two combined streams with a complex pseudonoise code.

2. The method as claimed in claim 1, wherein the modulating each of a plurality of channel encoded data with an associated code comprises:
modulating a pilot channel data with a first code to produce a first stream of modulated symbols;
modulating a user first channel encoded data with a second code to produce a second stream of modulated symbols; and
modulating a control channel data with a third code to produce a third stream of modulated symbols.

3. The method as claimed in claim 2, wherein said combining the plurality of streams of modulated symbols comprises:
adding the first stream of modulated symbols to one of the second or third stream of modulated symbols to provide a first added stream of modulated symbols; and
providing said first added stream separately from the remaining of the second or third stream of modulated symbols for said complex multiplying.

4. The method as claimed in claim 2, further comprising:
modulating a user second channel encoded data with a fourth code to produce a fourth stream of modulated symbols.

5. The method as claimed in claim 4, wherein said combining the plurality of streams of modulated symbols comprises:
adding the first stream of modulated data to the second stream of modulated symbols to provide a first added stream of modulated symbols; and
adding the fourth stream of modulated data to the third stream of modulated symbols to provide a second added stream of modulated symbols;
providing said first added stream separately from the second added stream of modulated symbols for said complex multiplying.

6. The method as claimed in claim 4, wherein said combining the plurality of streams of modulated symbols comprises:
adding the first stream of modulated symbols to the second stream of modulated symbols and to the third stream of modulated symbols to provide a first added stream of modulated symbols; and
providing said first added stream separately from the fourth stream of modulated symbols for said complex multiplying.

7. The method as claimed in claim 1 wherein the complex pseudonoise code comprises an in-phase pseudonoise code component and a quadrature-phase pseudonoise code component.

8. The method as claimed in claim 7 wherein the in-phase pseudonoise code component and the quadrature-phase pseudonoise code component are multiplied by a long code.

9. The method as claimed in claim 1 wherein said complex multiplying comprises:
multiplying a first combined stream with an in-phase pseudonoise code component yielding an In-phase term; and
multiplying a second combined stream with a quadrature-phase pseudonoise code component yielding a quadrature phase term.

10. The method as claimed in claim 9 wherein said complex multiplying comprises:
multiplying the first combined stream by the in-phase pseudonoise code component to produce a first intermediate signal;
multiplying the second combined stream by the in-phase pseudonoise code component to produce a second intermediate signal;
multiplying the first combined stream by the quadrature-phase pseudonoise code component to produce a third intermediate signal;
multiplying the second combined stream by the quadrature-phase pseudonoise code component to produce a fourth intermediate signal;
subtracting the fourth intermediate signal from the first intermediate signal to produce an in-phase product signal; and
adding the second intermediate signal to the third intermediate signal to produce a quadrature-phase product signal.

11. The method as claimed in claim 1, wherein the plurality of associated codes comprises a plurality of Walsh codes.

12. The method as claimed in claim 1 or 2 or 4, wherein a rate of data of a channel determines a length of an associated code.

13. The method as claimed in claim 2 or 4, wherein a length of the second code is smaller than a length of the third code.

14. The method as claimed in claim 4, wherein a length of the fourth code is smaller than a length of the third code.

15. The method as claimed in claim 4, wherein a length of the fourth code is smaller than a length of the second code when a rate of data of the user first channel is smaller than a rate of data of the user second channel.

16. The method as claimed in claim 2 or 4, wherein first code comprises a Walsh code with + values.

17. The method as claimed in claim 2 or 4, wherein third code comprises a Walsh code with length of eighth chips.

18. The method as claimed in claim 17, wherein third code comprises a Walsh code ++++--.

19. The method as claimed in claim 2 or 4, wherein the second code comprises a Walsh code with length of four chips.

20. The method as claimed in claim 19, wherein the second code comprises a Walsh code ++--.

21. The method as claimed in claim 2 or 4, wherein the second code comprises a Walsh code with length of two chips.

22. The method as claimed in claim 21, wherein the second code comprises a Walsh code +-.

23. The method as claimed in claim 4, wherein the fourth code comprises a Walsh code with length of four chips.

24. The method as claimed in claim 23, wherein the fourth code comprises a Walsh code ++--.

25. The method as claimed in claim 4, wherein the fourth code comprises a Walsh code with length of two chips.

26. The method as claimed in claim 25, wherein the fourth code comprises a Walsh code +-.

27. The method as claimed in claim 1, further comprising:
adjusting gain of the plurality of streams of modulated symbols.

28. The method as claimed in claim 27, wherein said adjusting gain of the plurality of streams of modulated symbols comprises:
adjusting gain of a first stream of modulated symbols; and
adjusting gains of each of the remaining streams to values determined relative to the gain of the first stream.

29. An apparatus for modulating a signal by generating data for transmission from a subscriber unit to a base station in a communication system, **characterised in that** the apparatus comprises:
means for modulating channel encoded data (402, 404, 411, 415) from a plurality of channels with an associated code for each channel, selected from a number of associated codes, wherein each associated code is of a different length from remaining associated codes and each associated code is orthogonal to remaining associated codes, to produce a plurality of streams of modulated symbols;
means for combining the plurality of streams of modulated symbols into two combined streams (410, 420); and
means for complex multiplying said two combined streams (410, 420) with a complex pseudonoise code.

30. The apparatus as claimed in claim 29, wherein the means for modulating each of a plurality of channel encoded data with an associated code comprises:
means for modulating a pilot channel data (402) with a first code to produce a first stream of modulated symbols;
means for modulating a user first channel encoded data (404) with a second code to produce a second stream of modulated symbols; and
means for modulating a control channel data (415) with a third code to produce a third stream of modulated symbols.

31. The apparatus as claimed in claim 30, wherein said means for combining the plurality of streams of modulated symbols comprises:
means for adding (408) the first stream of modulated symbols to one of the second or third stream of modulated symbols to provide a first added stream (410) of modulated symbols; and
means for providing said first added stream separately from the remaining of the second or third stream of modulated symbols for said complex multiplying.

32. The apparatus as claimed in claim 30, further comprising:
means for modulating a user second channel (411) encoded data with a fourth code to produce a fourth stream of modulated symbols.

33. The apparatus as claimed in claim 32, wherein said means for combining the plurality of streams of modulated symbols comprises:
means for adding (408) the first stream of modulated data to the second stream of modulated symbols to provide a first added stream of modulated symbols (410); and
means for adding (419) the fourth stream of modulated data to the third stream of modulated symbols to provide a second added stream of modulated symbols (420);
means for providing said first added stream (410) separately from the second added stream (420) of modulated symbols for said complex multiplying.

34. The apparatus as claimed in claim 32, wherein said means for combining the plurality of streams of modulated symbols comprises:
means for adding the first stream of modulated symbols to the second stream of modulated symbols and to the third stream of modulated symbols to provide a first added stream of modulated symbols; and
means for providing said first added stream separately from the fourth stream of modulated symbols for said complex multiplying.

35. The apparatus as claimed in claim 29 wherein the complex pseudonoise code comprises an in-phase pseudonoise code component and a quadrature-phase pseudonoise code component.

36. The apparatus as claimed in claim 35 wherein the in-phase pseudonoise code component and the quadrature-phase pseudonoise code component are multiplied by a long code.

37. The apparatus as claimed in claim 29 wherein said means for complex multiplying comprises:
means for multiplying a first combined stream (410) with an in-phase pseudonoise code component yielding an In-phase term; and
means for multiplying a second combined stream (420) with a quadrature-phase pseudonoise code component yielding a quadrature phase term.

38. The apparatus as claimed in claim 37 wherein said means for complex multiplying comprises:
means for multiplying (164a) the first combined stream (410) by the in-phase pseudonoise code component to produce a first intermediate signal;
means for multiplying (164c) the second combined stream (420) by the in-phase pseudonoise code component to produce a second intermediate signal;
means for multiplying (164d) the first combined stream (410) by the quadrature-phase pseudonoise code component to produce a third intermediate signal;
means for multiplying (164b) the second combined stream (420) by the quadrature-phase pseudonoise code component to produce a fourth intermediate signal;
means for subtracting (166a) the fourth intermediate signal from the first intermediate signal to produce an in-phase product signal; and
means for adding (166b) the second intermediate signal to the third intermediate signal to produce a quadrature-phase product signal.

39. The apparatus as claimed in claim 29, wherein the plurality of associated codes comprises a plurality of Walsh codes.

40. The apparatus as claimed in claim 29 or 30 or 32, wherein a rate of data of a channel determines a length of an associated code.

41. The apparatus as claimed in claim 30 or 32, wherein a length of the second code is smaller than a length of the third code.

42. The apparatus as claimed in claim 32, wherein a length of the fourth code is smaller than a length of the third code.

43. The apparatus as claimed in claim 32, wherein a length of the fourth code is smaller than a length of the second code when a rate of data of the user first channel is smaller than a rate of data of the user second channel.

44. The apparatus as claimed in claim 30 or 32, wherein first code comprises a Walsh code with + values.

45. The apparatus as claimed in claim 30 or 32, wherein third code comprises a Walsh code with length of eighth chips.

46. The apparatus as claimed in claim 45, wherein third code comprises a Walsh code ++++----.

47. The apparatus as claimed in claim 30 or 32, wherein the second code comprises a Walsh code with length of four chips.

48. The apparatus as claimed in claim 47, wherein the second code comprises a Walsh code ++-.

49. The apparatus as claimed in claim 30 or 32, wherein the second code comprises a Walsh code with length of two chips.

50. The apparatus as claimed in claim 49, wherein the second code comprises a Walsh code +-.

51. The apparatus as claimed in claim 32, wherein the fourth code comprises a Walsh code with length of four chips.

52. The apparatus as claimed in claim 51, wherein the fourth code comprises a Walsh code ++--.

53. The apparatus as claimed in claim 32, wherein the fourth code comprises a Walsh code with length of two chips.

54. The apparatus as claimed in claim 53, wherein the fourth code comprises a Walsh code +-.

55. The apparatus as claimed in claim 29, further comprising:
means for adjusting gain (400, 406, 414, 418) of the plurality of streams of modulated symbols.

56. The apparatus as claimed in claim 55, wherein said means for adjusting gain of the plurality of streams of modulated symbols comprises:
means for adjusting gain (400) of a first stream of modulated symbols; and
means for adjusting gains (406, 414, 418) of each of the remaining streams to values determined relative to the gain of the first stream.

57. A method for demodulating a signal at a base station received from a transmission in a communication system **characterised by** the steps of:
complex-multiplying a complex received signal by an in-phase pseudorandom spreading code and a quadrature-phase pseudorandom spreading code to provide an in-phase sample stream and a quadrature-phase sample stream;
filtering the in-phase sample stream to provide an in-phase pilot filter signal;
filtering the quadrature-phase sample stream to provide a quadrature-phase pilot filter signal;
multiplying the in-phase sample stream by a first code of a plurality of codes, wherein each of the plurality of codes is of a different length and is orthogonal to remaining codes, to produce an in-phase despread symbol first channel stream,
multiplying the quadrature-phase sample stream by the first code to produce a quadrature-phase despread symbol first channel stream; and
phase rotating and seating the in-phase despread symbol first channel stream and the quadrature-phase despread symbol first channel stream in accordance with the in-phase pilot filter signal and the quadrature-phase pilot fitter signal to produce a soft decision first channel data stream.

58. The method of claim 57 further comprising:
summing the in-phase despread symbol first channel stream in accordance with the length of the first code; and
summing the quadrature-phase despread symbol first channel stream in accordance with the length of the first code.

59. The method of claim 57 wherein the phase rotating and scaling comprises:
multiplying the in-phase despread symbol first channel stream by the in-phase pilot filter signal to provide in-phase soft decision first channel data stream; and
multiplying the quadrature-phase despread symbol first channel stream by the quadrature-phase pilot filter signal to provide quadrature-phase soft decision first channel data stream.

60. The method of claim 59, further comprising:
summing the in-phase and the quadrature-phase soft decision first channel data streams.

61. The method of claim 60 further comprising summing the soft decision first channel stream over a pre-determined number of soft-decision symbols to produce a summed soft decision first channel stream.

62. The method of claim 57 further comprising:
multiplying the in-phase sample stream by a second code to produce an in-phase despread symbol second channel stream;
multiplying the auadrature-phase sample stream by the second code to produce a quadrature-phase despread symbol second channel stream; and
phase rotating and scaling the in-phase symbol second channel stream and r.he quadrature-phase symbol second channel stream to produce a soft decision second channel data stream.

63. The method of claim 57 or 58 or 62, wherein a code comprises a Walsh code.

64. The method of claim 57 or 63 wherein the first code has a length of four chips,

65. The method of claim 57 or 63 wherein the first code is equal to +, +,-,-.

66. The method of claim 57 or 63 wherein the first code is equal to +, -, +,-.

67. The method of claim 57 or 63 wherein the first code has a length of two chips.

68. The method of claim 57 or 63 wherein the first code is equal to +,-.

69. The method of claim 57 or 63, wherein the first code has a length of eighth chips.

70. The method of claim 57 or 63 wherein the first code is equal to +,+,+,+,-,-,-,-.

71. The method of claim 62 wherein the length of the first code is not equal to the length of the second code.

72. The method of claim 71 wherein the second code has a length of four chips.

73. The method of claim 71 wherein the second code is equal to +, +, -, -.

74. The method of claim 71 wherein the second code is equal to +, -, +, -.

75. The method of claim 71, wherein the second code has a length of two chips.

76. The method of claim 71, wherein the second code is equal to +,-.

77. A apparatus for demodulating a signal suitably at a base station received from a transmission in a communication system, **characterised in that** the apparatus comprising:
a complex-multiplier (301-304) configured to complex-multiply a complex received signal by an in-phase pseudorandom spreading code and a quadrature-phase pseudorandom spreading code to provide an in-phase sample stream and a quadrature-phase sample stream;
a first pilot filter (314) configured to filter the in-phase sample stream to provide an in-phase pilot filter signal;
a second pilot filter (314) configured to filter the quadrature-phase sample stream to provide a quadrature-phase pilot filter signal;
a first multiplier (310) configured to multiply the in-phase sample stream by a first code of a plurality of codes, wherein each of the plurality of codes is of a different length and is orthogonal to remaining codes, to produce an in-phase despread symbol first channel stream;
a second multiplier (310) configured to multiply the quadrature-phase sample stream by the first code to produce a quadrature-phase despread symbol first channel stream; and
first means (316, 320) for phase rotating and scaling the in-phase despread symbol first channel stream and the quadrature-phase despread symbol first channel stream in accordance with the in-phase pilot filter signal and the quadrature-phase pilot filter signal to produce a soft decision first channel data stream.

78. The apparatus of claim 77 further comprising:
a first summer (312) configured to sum the in-phase despread symbol first channel stream in accordance with the length of the first code; and
a second summer (312) configured to sum the quadrature-phase despread symbol first channel stream in accordance with the length of the first code.

79. The apparatus of claim 77 further comprising:
a third multiplier (316) configured to multiply the in-phase despread symbol first channel stream by the in-phase pilot filter signal to provide in-phase soft decision first channel data stream; and
a fourth multiplier (316) configured to multiply the quadrature-phase despread symbol first channel stream by the quadrature-phase pilot filter signal to provide quadrature-phase soft decision first channel data stream.

80. The apparatus of claim 79, further comprising:
a third summer (322) configured to sum the in-phase and the quadrature-phase soft decision first channel data streams.

81. The apparatus of claim 78 further comprising a fourth summer (322) configured to sum the soft decision first channel stream over a pre-determined number of soft-decision symbols to produce a summed soft decision first channel stream.

82. The apparatus of claim 77 further comprising:
a third multiplier (316) configured to multiply the in-phase sample stream by a second code to produce an in-phase despread symbol second channel stream;
a fourth multiplier (316) configured to multiply the quadrature-phase sample stream by the second code to produce a quadrature-phase symbol second channel stream; and
second means for phase rotating and scaling the in-phase symbol second channel stream and the quadrature-phase symbol second channel stream to produce a soft decision second channel data stream.

83. The apparatus of claim 77 or 78 or 81, wherein a code comprises a Walsh code.

84. The apparatus of claim 77 or 83, wherein the first code has a length of four chips.

85. The apparatus of claim 77 or 83, wherein the first code is equal to +, +,-,-.

86. The apparatus of claim 77 or 83 wherein the first code is equal to +, -, +, -.

87. The apparatus of claim 77 or 83 wherein the first code has a length of two chips.

88. The apparatus of claim 77 or 83 wherein the first code is equal to +,-.

89. The apparatus of claim 77 or 83, wherein the first code has a length of eighth chips.

90. The apparatus of claim 77 or 83 wherein the first code is equal to +,+,+,+,-,-,-,-.

91. The apparatus of claim 82 wherein the length of the first code is not equal to the length of the second code.

92. The apparatus of claim 91 wherein the second code has a length of four chips.

93. The apparatus of claim 91 or 92 wherein the second code is equal to +, +, -, -.

94. The apparatus of claim 91 or 92 wherein the second code is equal to +, -, +, -.

95. The apparatus of claim 91, wherein the second code has a length of two chips.

96. The apparatus of claim 91 or 95, wherein the second code is equal to +,-.

## Patentansprüche

1. Ein Verfahren zum Modulieren eines Signals durch Erzeugen von Daten zur Übertragung, und zwar geeignet zu Übertragung von einer Teilnehmereingeit zu einer Basisstation, in einem Kommunikationssystem bzw. Nachrichtenübermittlungssystem **gekennzeichnet dadurch, dass** das Verfahren die folgenden Schritte aufweist:
Modulieren von kanalcodierten Daten von einer Vielzahl von Kanälen mit einem assoziierten Code für jeden Kanal, ausgewählt aus einer Anzahl von assoziierten Codes, wobei jeder assoziierte Code eine unterschiedliche Länge von verbleibenden assoziierten Codes besitzt und jeder assoziierte Code orthogonal zu verbleibenden assoziierten Codes ist, und zwar zum Erzeugen einer Vielzahl von Strömen mit modulierten Symbolen;
Kombinieren der Vielzahl von Strömen mit modulierten Symbolen in zwei kombinierte Ströme; und
komplexes Multiplizieren der zwei kombinierten Ströme mit einem komplexen Pseudo-Rausch-Code.

2. Verfahren nach Anspruch 1, wobei das Modulieren von jedem von einer Vielzahl von kanalcodierten Daten mit einem assoziierten Code Folgendes aufweist:
Modulieren von Pilotkanaldaten mit einem ersten Code zum Erzeugen eines ersten Stroms mit modulierten Symbolen;
Modulieren von ersten nutzerkanalcodierten Daten mit einem zweilten Code zum Erzeugen eines zweiten Stroms mit modulierten Symbolen; und
Modulierten von Steuerkanaldaten mit einem dritten Code zum Erzeugen eines dritten Stroms mit modulierten Symbolen.

3. Verfahren nach Anspruch 2, wobei das Kombinieren der Vielzahl von Strömen mit modulierten Symbolen Folgendes aufweist.
Addieren des ersten Stroms mit modulierten Symbolen zu einem von dem zweiten oder dritten Strom mit modulierten Symbolen zum Vorsehen eines ersten addierten Stroms mit modulierten Symbolen; und
Vorsehen des ersten addierten Stroms getrennt, von dem verbleibenden, von dem zweiten oder dritten Strom mit modulierten Symvbolen für das komplexe Multiplizieren.

4. Verfahren nach Anspruch 2, das ferner aufweist:
Modulieren von zweiten nutzerkanalcodierten Daten mit einem vierten Code zum Erzeugen eines vierten Stroms mit modulierten Symbolen.

5. Verfahren nach Anspruch 4, wobei das Kombinieren der Vielzahl von Strömen mit modulierten Symbolen Folgendes aufweist:
Addieren des ersten Stroms mit modulierten Daten zu dem zweiten Strom mit modulierten Symbolen zum Vorsehen eines ersten addierten Stroms mit modulierten Symblolen; und
Addieren des vierten Stroms mit modulierten Daten zu dem dritten Strom modulierten Symbolen;
Vorsehen des ersten addierten Stroms getrennt von dem zweiten addierten Strom mit modulierten Symbolen für das komplexe Multiplizieren.

6. Verfahren nach Anspruch 4, wobei das Kombinieren der Vielzahl von Strömen mit modulierten Symbolen Folgendes aufweist:
Addieren des ersten Stroms mit modulierten Symbolen zu dem zweiten Strom mit modulierten Symbolen und zu dem dritten Strom mit modulierten Symbolen zum Vorsehen eines ersten addierten Stroms mit modulieren Symbolen; und
Vorsehen des ersten addierten Stroms separat von dem vierten Strom mit modulierten Symbolen für das komplexe Multiplizieren.

7. Verfahren nach Anspruch 1, wobei der komplexe Pseudo-Rausch-Code eine in-phasige Pseudo-Rausch-Code-Komponente und eine quadratur-phasige Pseudo-Rausch-Code-Komponente aufweist.

8. Verfahren nach Anspruch 7, wobei die in-phasige Pseudo-Rausch-Code-Komponente und die quadratur-phasige Pseudo-Rausch-Code-Komponente mit einem langen Code (long code) multipliziert werden.

9. Verfahren nach Anspruch 1, wobei das komplexe Multiplizieren Folgendes aufweist:
Multiplizieren eines ersten kombinierten Stroms mit einer in-phasigen Pseudo-Rausch-Code-Komponente was zu einem in-phasigen Ausdruck führt; und
Multiplizieren eines zweiten kombinierten Stroms mit einer quadratur-phasigen Pseudo-Rausch-Code-Komponente was zu einem quadratur-phasigne Ausdruck führt.

10. Verfahren nach Anspruch 9, wobei das komplexe Multiplizieren Folgendes aufweist.
Multiplizieren des ersten kombinierten Stroms mit der in-phasigen Pseudo-Rausch-Code-Komponente zum Erzeugen eines ersten Zwischensignals;
Multiplizieren des zweiten kombinierten Stroms mit der in-phasigen Pseudo-Rausch-Code-Komponente zum Erzeugen eines zweiten Zwischensignals;
Multiplizierten des ersten kombinierten Stroms mit der quadratur-phasigen Pseudo-Rausch-Code-Komponente zum Erzeugen eines dritten Zwischensignals;
Multiplizierten des zweiten kombinierten Stroms mit der quadratur-phasigen Pseudo-Rausch-Code-Komponente zum Erzeugen eines vierten Zwwischensignals;
Subtrahieren des vierten Zwischensignals von dem ersten Zwischensignal zum Erzeugen eines in-phasigen Produktsignals; und
Addieren des zweiten Zwischensignals zu dem dritten Zwischensignal zum Erzeugen eines quadratur-phasigen Produktsignals.

11. Verfahren nach Anspruch 1, wobei de Vielzahl von assoziierten Codes eine Vielzahl von Walsh-Codes aufweist.

12. Verfahren nach Anspruch 1 oder 2 oder 4, wobei eine Rate bzw. Geschwindigkeit von Daten von einem Kanal eine Länge von einem assozierten Code bestimmt.

13. Verfahren nach Anspruch 2 oder 4, wobei eine Länge des zweiten Codes kleiner als eine Länge des dritten Codes ist.

14. Verfahren nach Anspruch 4, wobei eine Länge des vierten Codes kleiner als eine Länge des dritten Codes ist.

15. Verfahren nach Anspruch 4, wobei eine Länge des vierten Codes kleiner ist als eine Länge des zweiten Codes, wenn eine Rate bzw. Geschwindigkeit von Daten von dem ersten Nutzerkanal kleiner ist, als eine Rate von Daten von dem zwieten Nutzerkanal.

16. Verfahren nach Anspruch 2 oder 4, wobei der erste Code einen Walsh-Code mit + Werten aufweist.

17. Verfahren nach Anspruch 2 oder 4, wobei der dritte Code einen Walsh-Code mit einer Länge von acht Chips aufweist.

18. Verfabren nach Anspruch 17, wobei der dritte Code einen Walsh-Code +++---- aufweist.

19. Verfahren nach Anspruch 2 oder 4, wobei der zweite Code einen Walsh-Code mit einer Länge von vier Chips aufweist.

20. Verfahren nach Anspruch 19, wobei der zweite Code einen Walsh-Code ++-- aufweist.

21. Verfahren nach Anspruch 2 oder 4, wobei der zweite Code einen Walsh-Code mit einer Länge von zwei Chips aufweist.

22. Verfahren nach Anspruch 21, wobei der zweite Code einen Walsh-Code +- aufweist.

23. Verfahren nach Anspruch 4, wobei der vierte Code einen Walsh-Code mit einer Länge von vier Chips aufweist.

24. Verfahren nach Anspruch 23, wobei der vierte Code einen Walsh-Code ++-- aufweist.

25. Verfahren nach Anspruch 4, wobei der vierte Code einen Walsh-Code mit einer Länge von zwei Chips aufweist.

26. Verfahren nach Anspuch 25, wobei der vierte Code einem Walsh-Code +- aufweist.

27. Verfahren nach Anspruch 1, das ferner aufweist:
Einstellen einer Verstärkung von der Vielzahl von Strömen mit modulierten Symbolen.

28. Verfahren nach Anspruch 27, wobei die Einstellung der Verstärkung der Vielzahl von Strömen mit modulierten Symbolen Folgendes aufweist:
Einstellen von Verstärkung von einem ersten Strom mit modulierten Symbolen; und
Einstellen von Verstärkungen von jedem von den verbleibenden Strömen auf Werten, die relativ zu der Verstärkung von dem ersten Strom bestimmt werden.

29. Eine Vorrichtung zum Modulieren eines Signals durch Erzeugen von Daten zur Übertragung von einer Teilnehmereinheit zu einer Basisstation in einem Kommunikationssystem bzw, Nachrichtenübermittlungssystem, **dadurch gekennzeichnet, dass** die Vorrichtung Folgendes aufweist:
Mittel zum Modulieren von kanalcodierten Daten (402, 404, 411, 415) von einer Vielzahl von Kanälen mit einem assoziierten Codes, wobei jeder assoziierte Code eine unterschiedliche Länge von restlichen bzw. verbleibenden assoziierten Codes hat und jeder assoziierte Code orthogonal zu verbleibenden assoziierten Codes ist, und zwar zum Erzeugen von einer Vielzahl von Strömen mit modulierten Symbolen;
Mittel zum Kombinieren der Vielzahl von Strömen mit modulierten Symbolen in zwei kombinierte Stöme (410, 420); und
Mittel zum komplexen Multiplizieren der zwei kombinierten Ströme (410, 420) mit einem komplexen Pseudo-Rausch-Code.

30. Vorrichtung nach Anspruch 29, wobei die Mittel zum Modulieren von jeder von einer Vielzahl von kanalcodierten Daten mit einem assoziierten Code Folgendes aufweisen:
Mittel zum Modulieren von Pilotkanaldaten (402) mit einem ersten Code zum Erzeugen eines ersten Stroms mit modulierten Symbolen;
Mittel zum Modulieren von ersten nutzerkanalcodierten Daten (404) mit einem zweiten Code zum Erzeugen eines zweiten Stroms mit modulierten Symbolen; und
Mittel zum Modulieren von Steuerkanaldaten (415) mit einem dritten Code zum Erzeugen eines dritten Stroms mit modulierten Symbolen.

31. Vorrichtung nach Anspruch 30, wobei die Mittel zum Kombinieren der Vielzahl von Strömen mit modulierten Symbolen Folgendes aufweisen:
Mittel zum Addieren (408) des ersten Stroms mit modulierten Symbolen zu einem von den zaeiten oder dritten Strom mit modulierten Symbolen zum Vorsehen eines ersten addierten Stroms (410) mit modulierten Symbolen; und
Mittel zum Vorsehen des ersten addierten Stroms separat von dem verbleibenden von dem zweiten oder dritten Strom mit modulierten Symbolen für das komplexe Multiplizieren.

32. Vorrichtung nach Anspruch 30, die ferner aufweist:
Mittel zum Modulieren von zweiten nutzerkanal-(411)-codierten Daten mit einem vierten Code zum Erzeugen eines vierten Stroms mit modulierten Symbolen.

33. Vorrichtung nach Anspruch 32, wobei die Mittel zum Kombinieren der Vielzahl von Strömen mit modulierten Symbolen Folgendes aufweisen:
Mittel zum Addieren (408) des ersten Stroms mit modulierten Daten zu dem zweiten Strom mit modulierten Symbolen zum Vorsehen eines ersten addierten Stroms mit modulierten Symbolen (410); und
Mittel zum addieren (419) des vierten stroms mit modulierten Daten zu dem dritten Strom mit modulierten Symbolen zum vorsehen eines zweiten addierten Stroms mit modulierten Symbolen (420);
Mittel zum Vorsehen des ersten addierten Stroms (410) separat von dem zweiten addierten Strom (420) mit modulierten Symbolen für das komplexe Multiplizieren.

34. Vorrichtung nach Anspruch 32, wobei die Mittel zum Kombinieren der Vielzahl von Stömen mit modulierten Symbolen Folgendes aufweisen:
Mittel zum Addieren des ersten Stroms mit modulierten Symbolen zu dem zweiten Strom mit modulierten Symbolen und zu dem dritten Strom mit modulierten Symbolen zum Vorsehen eines ersten addierten Stroms mit modulierten Symbolen; und
Mittel zum Vorsehen des ersten addierten Stroms separat von dem vierten Strom mit modulierten Symbolen für das komplexe Multiplizieren.

35. Vorrichtung nach Anspruch 29, wobei der komplexe Pseudo-Rausch-Code eine in-phasige Pseudo-Rausch-Code-Komponente und eine quadratur-phasige Pseudo-Rausch-Code-Komponente aufweist.

36. Vorrichtung nach Anspruch 35, wobei die in-phasige Pseudo-Rausch-Code-Komponente und die quadratur-phasige Pseudo-Rausch-Code-Komponente mit einem langen Code (long code) multipliziert werden.

37. Vorrichtung nach Anspruch 29, wobei die Mittel zum komplexen Multiplizieren Folgendes aufweisen:
Mittel zum Multiplizieren eines ersten kombinierten Stroms 410 mit einer in-phasigen Pseudo-Rausch-Code-Komponente, was zu einem in-phasigen Ausdruck führt;
Mittel zum Multiplizieren eines zweiten kombinierten Stroms 420 mit einer quadratur-phasigen Pseudo-Rausch-Code-Komponente, was zu einem quadratur-phasigen Ausdruck führt.

38. Vorrichtung nach Anspruch 37, wobei die Mittel zum komplexen Multiplizieren Folgendes aufweisen:
Mittel zum Multiplizieren (164a) des ersten kombinierten Stroms (410) mit der in-phasigen Pseudo-Rausch-Code-Komponente zum Erzeugen eines ersten Zwischensignals;
Mittel zum Multiplizieren (164c) des zweiten kombinierten Stroms (420) mit der in-phasigen Pseudo-Rausch-Code-Komponente zum Erzeugen eines zweiten Zwischensignals;
Mittel zum Multiplizieren (164d) des ersten kombinierten Stroms (410) mit der quadratur-phasigen Pseudo-Rausch-Code-Komponente zum Erzeugen eines dritten Zwischensignals;
Mittel zum Multiplizieren (164b) des zweiten kombinierten Stroms (420) mit der quadratur-phasigen Pseudo-Rausch-Code-Komponente zum Erzeugen eines vierten Zwischensignals;
Mittel zum Subtrahieren (166a) des vierten Zwischensignals von dem ersten Zwischensignal zum Erzeugen eines in-phasigen Produktsignals; und Mittel zum Addieren (166b) des zweiten Zwischensignals zu dem dritten Zwischensignal zum Erzeugen eines quadratur-phasigen Produktsignals.

39. Vorrichtung nach Anspruch 29, wobei die Vielzahl von assoziierten Codes eine Vielzahl von Walsh-Codes aufweist.

40. Vorrichtung nach Anspruch 29 oder 30 oder 32, wobei eine Rate bzw. Geschwindigkeit von Daten von einem Kanal eine Länge eines assoziierten Codes bestimmt.

41. Vorrichtung nach Anspruch 30 oder 32, wobei eine Länge des zweiten Codes kleiner als eine Länge des dritten Codes ist.

42. Vorrichtung nach Anspruch 32, wobei eine Länge des vierten Codes Kleiner als eine Länge des dritten Codes ist.

43. Vorrichtung nach Anspruch 32, wobei eine Länge des vierten Codes kleiner ist, als eine Länge des zweiten Codes, wenn eine Rate bzw. Geschwindigkeit von Daten von dem ersten Nutzerkanal kleiner ist als eine Rate bzw. Geschwindigkeit von Daten von dem zweiten Nutzerkanal.

44. Vorrichtung nach Anspruch 30 oder 32, wobei der erste Code einen Walsh-Code mit + Werten aufweist.

45. Vorrichtung nach Anspruch 30 oder 32, wobei der dritte Code einen Walsh-Code mit einer Länge von acht Chips aufweist.

46. Vorrichtung nach Anspruch 45, wobei der dritte Code einen Walsh-Code ++++--- aufweist.

47. Vorrichtung nach Anspruch 30 oder 32, wobei der zweite Code einen Walsh-Code mit einer Länge von vier Chips aufweist.

48. Vorrichtung nach Anspruch 47, wobei der zweite Code einen Walsh-Code ++-- aufweist.

49. Vorrichtung nach Anspruch 30 oder 32, wobei der zweite Code einen Walsh-Code mit einer Länge von zwei Chips aufweist.

50. Vorrichtung nach Anspruch 49, wobei der zweite Code einen Walsh-Code +- aufweist.

51. Vorrichtung nach Anspruch 32, wobei der vierte Code einen Walsh-Code mit einer Länge von vier Chips aufweist.

52. Vorrichtung nach Anspruch 51, wobei der vierte Code einen Walsh-Code ++- aufweist.

53. Vorrichtung nach Anspruch 32, wobei der vierte Code einen Walsh-Code mit einer Länge von zwei Chips aufweist.

54. Vorrichtung nach Anspruch 53, wobei der vierte Code einen Walsh-Code +- aufweist.

55. Vorrichtung nach anspruch 29, die ferner aufweist:
Mittel zum Einstellen bzw. Anpassen von Verstärkung (400, 406, 414, 418) von der Vielzahl von Strömen mit modulierten Symbolen.

56. Vorrichtung nach Anspruch 55, wobei die Mittel zum Einstellen von Verstärkung von der Vielzahl von Strömen mit modulierten Symbolen Folgendes aufweisen:
Mittel zum Einstellen von Verstärkung (400) von einem ersten Strom mit modulierten Symbolen; und
Mittel zum Einstellen von Verstäkungen (406, 414, 418) von jedem von den verbleibenden Strömen auf Werte, die relativ zu der Verstärkung zu dem ersten Strom bestimmt werden.

57. Ein Verfahren zum Demodulieren eines Signals bei einer Basisstation, und zwar Empfangen von einer Übertragung in einem Kommunikationssystems bzw. Nachrichtenübermittlungssystem **gekennzeichnet durch** die Folgenden Schritte:
komplexes Multiplizieren eines komplexen empfangenen Signals mit einem in-phasigen pseudo-zufälligen Spreiz-Code und einem quadratur-phasigen pseudo-zufälligen Spreiz-Code zum Vorsehen eines in-phasigen Abtastungs- bzw. Probestroms und eines quadratur-phasigen Abtastungs- bzw. Probestroms;
Filtern des in-phasigen Muster- bzw. Probestroms zum Vorsehen eines inphasigen Pilotfiltersignals;
Filtern des quadratur-phasigen Muster- bzw. Probestroms zum Vorsehen eines quadratur-phasigen Pilotfiltersignals;
Multiplizterzn des in-phasigen Probestroms mit einem ersten Code von einer Vielzahl von Codes, wobei jeder von der Vielzahl von Codes eine unterschiedliche Länge hat und orthogonal zu dem verbleibenden bzw. restlichen Codes ist, und zwar Erzeugen eines in-phasigen entspreizten ersten Symbolkanalstroms;
Multiplizieren des quadratur-phasigen Probestroms mit dem ersten Code zum Erzeugen eines quadratur-phasigen entspreizten ersten Symbolkanalstroms; und
Phasendrehung und Skalierung des in-phasigen entspreizten ersten Symbolkanalstroms und des quadratur-phasigen entspreizten ersten Symbolkanalstroms, gemäß dem in-phasigen Pilotfiltersignal und dem quadratur-phasigen Pilotfiltersignal zum Erzeugen eines weich-entschiedenen bzw. soft decision ersten Kanlaldatenstroms.

58. Verfahren nach Anspruch 57, das fernes Folgendes aufweist:
Summieren des in-phasigen entspreizten ersten Symbolkanalstroms in Übereinstimmung mit der Länge des ersten Codes; und
Summieren des quadratur-phasigen entspreizten ersten Symbolkanalstroms in Übereinstimmung mit der Länge des ersten Codes.

59. Verfahren nach Anspruch 57, wobei die Phasendrehung und Skalierung Folgendes aufweist:
Multiplizieren des in-phasigen entspreizten ersten Symbolkanalstroms mit dem in-phasigen Pilotfiltersignal zum Vorsehen eines in-phasigen soft dexision ersten Kanaldatenstroms, und
Multiplizieren des quadratur-phasigen entspreizten ersten Symbolkanalstroms mit dem quadratur-phasigen Pilotfiltersignal zum Vorsehen eines quadratur-phasigen soft decision ersten Kanaldatenstroms.

60. Verfahren nach Anspruch 59, das ferner aufweist:
Summieren der in-phasigen und der quadratur- phasigen soft decision ersten Kanaldatenströme.

61. Verfahren nach Anspruch 60, das ferner Summieren des soft decision ersten Kanalstroms über eine vorherbestimmte Anzahl von soft decision Symbolen zum Erzeugen eines summierten soft decision ersten Kanalstroms aufweist.

62. Verfahren nach Anspruch 57, das ferner Folgendes aufweist:
Multiplizieren des in-phasigen Probestroms mit einem zweiten Code zum Erzeugen eines in-phasigens entspreizten zweiten Symbolkanalstroms;
Multiplizieren des quadratur-phasigen Probestroms mit einem zweiten Code zum Erzeugen eines quadratur-phasigen entspreizten zweiten Symbolkanalstroms; und
Phasendrehung und Skalierung des in-phasigen zweiten Symbolkanalstroms und des quadratur-phasigen zweiten Symbolkanalstroms zum Erzeugen eines soft decision zweiten Kanaldatenstoms.

63. Verfahren nach Anspruch 57 oder 58 oder 62, wobei ein Code einen Walsh-Code aufweist.

64. Verfahren nach Anspruch 57 order 63, wobei der erste Code eine Länge von vier Chips hat.

65. Verfahren nach Anspruch 57 oder 63, wobei der erste Code gleich ist zu +, +. -, -.

66. Verfahren nach Anspruch 57 oder 63, wobei der erste Code gleich ist zu +, -, +. -.

67. Verfahren nach Anspruch 57 oder 63, wobei der erste Code eine Länge von zwei Chips besitzt.

68. Verfahren nach Anspruch 57 oder 63, wobei der erste Code gleich ist zu +, -.

69. Verfahren nach Anspruch 57 oder 63, wobei der erste Code eine Länge von acht Chips besitzt.

70. Verfahren nach Anspruch 57 oder 63, wobei der erste Code gleich ist zu +,+,+,+, -,-,-,-.

71. Verfahren nach Anspruch 62, wobei die Länge des ersten Codes nicht gleich der Länge des zweiten Codes ist.

72. Verfahren nach Anspruch 71, wobei der zweite Code eine Länge von vier Chips besitzt.

73. Verfahren nach Anspruch 71, wobei der zweite Code gleich ist zu +,+,-,-.

74. Verfahren nach anspruch 71, wobei der zweite Code gleich ist zu +,-,+,-.

75. Verfahren nach Anspruch 71, wobei der zweite Code eine Länge von zwei Chips besitzt.

76. Verfahren nach Anspruch 71, wobei der zweite Code gleich ist zu +, -.

77. Eine Vorrichtung zum Demodulieren eines Signals geeignet an einer Basisstation, und zwar Empfangen von einer Übertrangung in einem Kommunikationssystem, wobei die Vorrichtung **dadurch gekennzeichnet ist, dass** sie Folgendes aufweist:
einen komplexen Multiplizierer (301-304) konfiguriert zum komplexen Multiplizieren eines komplexen emfangenen Signals mit einem in-phasigen pseudo-zufälligen Spreizcode und einem quadratur-phasigen pseudozufälligen Spreizcode zum Vorsehen eines in-phasigen Abtasfungs- bzw. Probestroms und eines quadratur-phasigen Abtastungs- bzw. Probestroms;
ein erstes Pilotfilter (314) konfiguriert zum Filtern des in-phasigen Tast- bzw. Probestroms zum Vorsehen eines in-phasigen Pilotfiltersignals;
ein zweites Pilotfilter (314) konfiguriert zum Filtern des quadratur-phasigen Tast- bzw. Probestroms zum Vorsehen eines quadratur-phasigen Pilotfiltersignals;
einen ersten Multiplizierer (310) konfiguriert zum Multiplizieren des in-phasigen Probestroms durch einen ersten Code von einer Vielzahl von Codes, wobei jeder von der Vielzahl von Codes eine unterschiedliche Länge hat und orthogonal zu verbleibenden bzw. restlichen Codes ist, und zwar zum Erzeugen eines in-phasigen entspreizten ersten Symbolkanalstroms;
einen zweiten Multiplizierer (310) konfiguriert zum Multiplizieren des quadratur-phasigen Probestroms mit dem ersten Code zum Erzeugen eines quadratur-phasigen entspreizten ersten Symbolkanalstroms; und
erste Mittel (316, 320) zur Phasendrehund und Skalierung des in-phasigen-entspreizten ersten Symbolkanalstroms und des quadratur-phasigen entspreizten ersten Symbolkanalstroms gemäß dem in-phasigen Pilotfiltersignal und dem quadraturphasigen Pilotfiltersignal zum Erzeugen eines soft decision bzw. weich-entschiedene ersten Kanaldatenstroms.

78. Vorrichtung nach Anspruch 77, die ferner Folgendes aufweist:
einen ersten Summierer (312) konfiguriert zum Summieren des in-phasigen entspreizten Symbolkanalstroms in Übereinstimmung mit der Länge des ersten Codes; und
einen zweiten Summierer (312) konfiguriert zum Summieren des quadratur-phasigen entspreizten ersten Symbolkanalstroms in Übereinstimmung mit der Länge des ersten Codes.

79. Vorrichtung nach Anspruch 77, die ferner Folgendes aufweist:
einen dritten Multiplizierer (316) konfiguriert zum Multiplizieren des in-phasigen entspreizten ersten Symbolkanalstroms mit dem in-phasigen Pilotfiltersignal zum Vorsehen eines in-phasigen soft decision ersten Kanaldatenstroms; und
einen vierten Multiplizierer (316) Konfiguriert zum Multiplizieren des quadratur-phasigen entspreizten ersten Symbolkanalstroms mit dem quadratur-phasigen Pilotfiltersignal zum Vorsehen eines quadratur-phasigen soft decision ersten Kanaldatenstroms.

80. Vorrichtung nach Anspruch 79, die ferner aufweist:
einen dritten Summierer (322) konfiguriert zum Summieren der in-phasigen und quadratur-phasigen soft-decision ersten Kanaldatenströme.

81. Vorrichtung nach Anspruch 76, die ferner einen vierten Summierer (322) aufweist, konfiguriert zum Summieren des soft decision ersten Kanalstroms über eine vorherbestimmte Anzahl von soft decision Symbolen zum Erzeugen eines summierten soft decision ersten Kanalstroms.

82. Vorrichtung nach Anspruch 77, die ferner Folgendes aufweist:
einen dritten Multiplizerer (316) konfiguriert zum Multiplizieren des in-phasigen Probestroms mit einem zweiten Code zum Erzeugen eines in-phasigen entspreizten zweiten Symbolkanalstroms;
einen vierten Multiplizerer (316) konfiguriert zum Multiplizieren des quadratur-phasigne Probestroms mit dem zweiten Code zum Erzeugen eines quadratur-phasigen zweiten Symbolkanalstroms; und
zweite Mittel zur Phasendrehung und Skalierung des in-phasigen zweiten Symbolkanalstroms und des quadratur-phasigen zweiten Symbolkanalstroms zum Erzeugen eines soft decission zweiten Kanaldatenstroms.

83. Vorrichtung nach Anspruch 77 oder 78 oder 81, wobei ein Code einen Walsh-Code aufweist.

84. Vorrichtung nach Anspruch 77 oder 83, wobei der erste Code eine Menge von vier Chips besitzt.

85. Vorricthung nach Anspruch 77 oder 83, wobei der erste Code gleich ist zu +, +, -, -,.

86. Vorrichtung nach Anspruch 77 oder 83, wobei der erste Code gleich ist zu +, -, +, -.

87. Vorrichtung nach Anspruch 77 oder 83, wobei der erste Code eine Länge von zwei Chips besitzt.

88. Vorrichtung nach Anspruch 77 oder 83, wobei der erste Code gleich ist zu +, -.

89. Vorrichtung nach Anspruch 77 oder 83, wobei der erste Code eine Länge von acht Chips besitzt.

90. Vorrichtung nach Anspruch 77 oder 83, wobei der erste Code gleich ist zu +, +, +, +, -, -, -, -,.

91. Vorrichtung nach Anspruch 82, wobei die Länge des ersten Codes nicht gleich der Länge des zweiten Codes ist.

92. Vorrichtung nach Anspruch 91, wobei der zweite Code eine Länge von vier Chips besitzt.

93. Vorrichtung nach Anspruch 91 oder 92, wobei der zweite Code gleich ist zu +, +, -, -,

94. Vorrichtung nach Anspruch 91 oder 92, wobei der zweite Code gleich ist zu +, -, +, -,

95. Vorrichtung nach Anspruch 91, wobei der zweite Code eine Länge von zwei Chips besitzt.

96. Vorrichtung nach Anspruch 91 oder 95, wobei der zweite Code gleich ist zu +, -.

## Revendications

1. Procédé de modulation d'un signal en produisant des données pour transmission adaptées à une transmission d'un poste d'abonné à une station de base dans un système de communication, **caractérisé en ce que** le procédé comprend les étapes suivantes :
moduler des données codées de canal en provenance d'une pluralité de canaux par un code associé pour chaque canal, choisi parmi plusieurs codes associés, dans lequel chaque code associé a une longueur différente des autres codes associés et chaque code associé est orthogonal aux autres codes associés, pour produire une pluralité de flux de symboles modulés ;
combiner la pluralité de flux de symboles modulés en deux flux combinés ; et
effectuer une multiplication complexe des deux flux combinés par un code complexe de pseudobruit.

2. Procédé selon la revendication 1, dans lequel la modulation de chacune d'une pluralité de données codées de canal par un code associé comprend :
moduler des données de canal pilote par un premier code pour produire un premier flux de symboles modulés ;
moduler des données codées de premier canal d'utilisateur par un second code pour produire un deuxième flux de symboles modulés ; et
moduler des données de canal de commande par un troisième code pour produire un troisième flux de symboles modulés.

3. Procédé selon la revendication 2, dans lequel la combinaison de la pluralité de flux de symboles modulés comprend :
ajouter le premier flux de symboles modulés à l'un des deuxième ou troisième flux de symboles modulés pour produire un premier flux de symboles modulés ajouté ; et
fournir le premier flux ajouté séparément du reste du deuxième ou du troisième flux de symboles modulés pour la multiplication complexe.

4. Procédé selon la revendication 2, comprenant en outre :
moduler des données codées de second canal d'utilisateur par un quatrième code pour produire un quatrième flux de symboles modulés.

5. Procédé selon la revendication 4, dans lequel la combinaison de la pluralité de flux de symboles modulés comprend :
ajouter le premier flux de symboles modulés au deuxième flux de symboles modulés pour produire un premier flux de symboles modulés ajouté;
ajouter le quatrième flux de symboles modulés au troisième flux de symboles modulés pour produire un deuxième flux de symboles modulés ajouté ; et
fournir le premier flux ajouté séparément du deuxième flux de symboles modulés ajouté pour la multiplication complexe.

6. Procédé selon la revendication 4, dans lequel la combinaison de la pluralité de flux de symboles modulés comprend :
ajouter le premier flux de symboles modulés au deuxième flux de symboles modulés et au troisième flux de symboles modulés pour produire un premier flux de symboles modulés ajouté ; et
fournir le premier flux ajouté séparément du quatrième flux de symboles modulés pour la multiplication complexe.

7. Procédé selon la revendication 1, dans lequel le code complexe de pseudobruit comprend une composante de code de pseudobruit en phase et une composante de code de pseudobruit en quadrature.

8. Procédé selon la revendication 7, dans lequel la composante de code de pseudobruit en phase et la composante de code de pseudobruit en quadrature sont multipliées par un code long.

9. Procédé selon la revendication 1, dans lequel la multiplication complexe comprend :
multiplier un premier flux combiné par une composante de code de pseudobruit en phase pour fournir un terme en phase ;
multiplier un second flux combiné par une composante de code de pseudobruit en quadrature pour fournir un terme en quadrature.

10. Procédé selon la revendication 9, dans lequel la multiplication complexe comprend :
multiplier le premier flux combiné par la composante de code de pseudobruit en phase pour produire un premier signal intermédiaire ;
multiplier le second flux combiné par la composante de code de pseudobruit en phase pour fournir un deuxième signal intermédiaire ;
multiplier le premier flux combiné par la composante de code de pseudobruit en quadrature pour produire un troisième signal intermédiaire ;
multiplier le second flux combiné par la composante de code de pseudobruit en quadrature pour fournir un quatrième signal intermédiaire ;
soustraire le quatrième signal intermédiaire du premier signal intermédiaire pour fournir un signal produit en phase ; et
ajouter le deuxième signal intermédiaire au troisième signal intermédiaire pour fournir un signal produit en quadrature.

11. Procédé selon la revendication 1, dans lequel la pluralité de codes associés comprend une pluralité de codes de Walsh.

12. Procédé selon la revendication 1, 2 ou 4, dans lequel le débit de données d'un canal détermine la longueur d'un code associé.

13. Procédé selon la revendication 2 ou 4, dans lequel la longueur du deuxième code est inférieure à la longueur du troisième code.

14. Procédé selon la revendication 4, dans lequel la longueur du quatrième code est inférieure à la longueur du troisième code.

15. Procédé selon la revendication 4, dans lequel la longueur du quatrième code est inférieure à la longueur du deuxième code quand le débit de données du premier canal d'utilisateur est inférieur au débit de données du second canal d'utilisateur.

16. Procédé selon la revendication 2 ou 4, dans lequel le premier code comprend un code de Walsh à valeurs positives.

17. Procédé selon la revendication 2 ou 4, dans lequel le troisième code comprend un code de Walsh à longueur de huit éléments de code.

18. Procédé selon la revendication 17, dans lequel le troisième code comprend un code de Walsh ++++----.

19. Procédé selon la revendication 2 ou 4, dans lequel le deuxième code comprend un code de Walsh ayant une longueur de quatre éléments de code.

20. Procédé selon la revendication 19, dans lequel le deuxième code comprend un code de Walsh ++--.

21. Procédé selon la revendication 2 ou 4, dans lequel le deuxième code comprend un code de Walsh ayant une longueur de deux éléments de code.

22. Procédé selon la revendication 21, dans lequel le deuxième code comprend un code de Walsh +-.

23. Procédé selon la revendication 4, dans lequel le quatrième code comprend un code de Walsh ayant une longueur de quatre éléments de code.

24. Procédé selon la revendication 23, dans lequel le quatrième code comprend un code de Walsh ++--.

25. Procédé selon la revendication 4, dans lequel le quatrième code comprend un code de Walsh ayant une longueur de deux éléments de code.

26. Procédé selon la revendication 25, dans lequel le quatrième code comprend un code de Walsh +-.

27. Procédé selon la revendication 1, comprenant en outre un réglage du gain de la pluralité de flux de symboles modulés.

28. Procédé selon la revendication 27, dans lequel le réglage de gain de la pluralité de flux de symboles modulés comprend :
régler le gain d'un premier flux de symboles modulés ; et
régler le gain de chacun des flux restants à des valeurs déterminées par rapport au gain du premier flux.

29. Dispositif de modulation d'un signal en produisant des données pour transmission d'un poste d'abonné à une station de base dans un système de communication, **caractérisé en ce que** le dispositif comprend :
des moyens pour moduler des données codées de canal (402, 404, 411, 415) en provenance d'une pluralité de canaux par un code associé pour chaque canal, choisi parmi plusieurs codes associés, dans lequel chaque code associé a une longueur différente des autres codes associés et chaque code associé est orthogonal aux autres codes associés, pour produire une pluralité de flux de symboles modulés ;
des moyens pour combiner la pluralité de flux de symboles modulés en deux flux combinés (410, 420) ; et
des moyens pour effectuer une multiplication complexe des deux flux combinés (410, 420) par un code complexe de pseudobruit.

30. Dispositif selon la revendication 29, dans lequel les moyens de modulation de chacun d'une pluralité de données codées de canal par un code associé comprennent :
des moyens pour moduler des données de canal pilote (402) par un premier code pour produire un premier flux de symboles modulés ;
des moyens pour moduler des données codées de premier canal d'utilisateur (404) par un second code pour produire un deuxième flux de symboles modulés ; et
des moyens pour moduler des données de canal de commande (415) par un troisième code pour produire un troisième flux de symboles modulés.

31. Dispositif selon la revendication 30, dans lequel les moyens de combinaison de la pluralité de flux de symboles modulés comprennent :
des moyens pour ajouter (408) le premier flux de symboles modulés à l'un des deuxième ou troisième flux de symboles modulés pour produire un premier flux de symboles modulés ajouté (410); et
des moyens pour fournir le premier flux ajouté séparément du reste du deuxième ou du troisième flux de symboles modulés pour la multiplication complexe.

32. Dispositif selon la revendication 30, comprenant en outre :
des moyens pour moduler des données codées de second canal d'utilisateur (411) par un quatrième code pour produire un quatrième flux de symboles modulés.

33. Dispositif selon la revendication 32, dans lequel les moyens de combinaison de la pluralité de flux de symboles modulés comprennent :
des moyens pour ajouter (408) le premier flux de symboles modulés au second flux de symboles modulés pour produire un premier flux de symboles modulés ajouté (410) ;
des moyens pour ajouter (419) le quatrième flux de symboles modulés au troisième flux de symboles modulés pour produire un deuxième flux de symboles modulés ajouté (420) ; et
des moyens pour fournir le premier flux ajouté (410) séparément du deuxième flux de symboles modulés ajouté (420) pour la multiplication complexe.

34. Dispositif selon la revendication 32, dans lequel les moyens de combinaison de la pluralité de flux de symboles modulés comprennent :
des moyens pour ajouter le premier flux de symboles modulés au deuxième flux de symboles modulés et au troisième flux de symboles modulés pour produire un premier flux de symboles modulés ajouté ; et
des moyens pour fournir le premier flux ajouté séparément du quatrième flux de symboles modulés pour la multiplication complexe.

35. Dispositif selon la revendication 29, dans lequel le code complexe de pseudobruit comprend une composante de code de pseudobruit en phase et une composante de code de pseudobruit en quadrature.

36. Dispositif selon la revendication 35, dans lequel la composante de code de pseudobruit en phase et la composante de code de pseudobruit en quadrature sont multipliées par un code long.

37. Dispositif selon la revendication 29, dans lequel les moyens de multiplication complexe comprennent :
des moyens pour multiplier un premier flux combiné (410) par une composante de code de pseudobruit en phase pour fournir un terme en phase ; et
des moyens pour multiplier un second flux combiné (420) par une composante de code de pseudobruit en quadrature pour fournir un terme en quadrature.

38. Dispositif selon la revendication 37, dans lequel les moyens de multiplication complexe comprennent :
des moyens (164a) pour multiplier le premier flux combiné (410) par la composante de code de pseudobruit en phase pour produire un premier signal intermédiaire ;
des moyens (164c) pour multiplier le second flux combiné (420) par la composante de code de pseudobruit en phase pour fournir un deuxième signal intermédiaire ;
des moyens (164d) pour multiplier le premier flux combiné (410) par la composante de code de pseudobruit en quadrature pour produire un troisième signal intermédiaire ;
des moyens (164b) pour multiplier le second flux combiné (420) par la composante de code de pseudobruit en quadrature pour fournir un quatrième signal intermédiaire ;
des moyens (166a) pour soustraire le quatrième signal intermédiaire du premier signal intermédiaire pour fournir un signal produit en phase ; et
des moyens (166b) pour ajouter le deuxième signal intermédiaire au troisième signal intermédiaire pour fournir un signal produit en quadrature.

39. Dispositif selon la revendication 29, dans lequel la pluralité de codes associés comprend une pluralité de codes de Walsh.

40. Dispositif selon la revendication 29, 30 ou 32, dans lequel le débit de données d' un canal détermine la longueur d'un code associé.

41. Dispositif selon la revendication 30 ou 32, dans lequel la longueur du deuxième code est inférieure à la longueur du troisième code.

42. Dispositif selon la revendication 32, dans lequel la longueur du quatrième code est inférieure à la longueur du troisième code.

43. Dispositif selon la revendication 32, dans lequel la longueur du quatrième code est inférieure à la longueur du second code quand le débit de données du premier canal d'utilisateur est inférieur au débit de données du second canal d'utilisateur.

44. Dispositif selon la revendication 30 ou 32, dans lequel le premier code comprend un code de Walsh à valeurs positives.

45. Dispositif selon la revendication 30 ou 32, dans lequel le troisième code comprend un code de Walsh à longueur de huit éléments de code.

46. Dispositif selon la revendication 45, dans lequel le troisième code comprend un code de Walsh ++++----.

47. Dispositif selon la revendication 30 ou 32, dans lequel le deuxième code comprend un code de Walsh ayant une longueur de quatre éléments de code.

48. Dispositif selon la revendication 47, dans lequel le deuxième code comprend un code de Walsh ++--.

49. Dispositif selon la revendication 30 ou 32, dans lequel le deuxième code comprend un code de Walsh ayant une longueur de deux éléments de code.

50. Dispositif selon la revendication 49, dans lequel le deuxième code comprend un code de Walsh +-.

51. Dispositif selon la revendication 32, dans lequel le quatrième code comprend un code de Walsh ayant une longueur de quatre éléments de code.

52. Dispositif selon la revendication 51, dans lequel le quatrième code comprend un code de Walsh ++--.

53. Dispositif selon la revendication 32, dans lequel le quatrième code comprend un code de Walsh ayant une longueur de deux éléments de code.

54. Dispositif selon la revendication 53, dans lequel le quatrième code comprend un code de Walsh +-.

55. Dispositif selon la revendication 29, comprenant en outre des moyens de réglage du gain (400, 406, 414, 418) de la pluralité de flux de symboles modulés.

56. Dispositif selon la revendication 55, dans lequel les moyens de réglage de gain de la pluralité de flux de symboles modulés comprennent :
des moyens pour régler le gain (400) d'un premier flux de symboles modulés ; et
des moyens pour régler le gain (406, 414, 418) de chacun des flux restants à des valeurs déterminées par rapport au gain du premier flux.

57. Procédé de démodulation au niveau d'une station de base d'un signal reçu à partir d'une transmission dans un système de communication **caractérisé par** les étapes suivantes :
multiplier de façon complexe un signal complexe reçu par un code d'étalement pseudo-aléatoire en phase et un code d'étalement pseudo-aléatoire en quadrature pour fournir un flux d'échantillons en phase et un flux d'échantillons en quadrature ;
filtrer le flux d'échantillons en phase pour fournir un signal de filtre de pilote en phase ;
filtrer le flux d'échantillons en quadrature pour fournir un signal de filtre de pilote en quadrature ;
multiplier le flux d'échantillons en phase par un premier code d'une pluralité de codes, chacun de la pluralité de codes ayant une longueur différente et étant orthogonal aux codes restants pour produire un flux de premier canal de symboles désétalés en phase ;
multiplier le flux d'échantillons en quadrature par le premier code pour produire un flux de premier canal de symboles désétalés en quadrature ; et
faire tourner en phase et normer le flux de premier canal de symboles désétalés en phase et le flux de premier canal de symboles désétalés en quadrature en accord avec le signal de filtre pilote en phase et le signal de filtre pilote en quadrature pour produire un flux de données de premier canal de décision pondérée.

58. Procédé selon la revendication 57, comprenant en outre :
additionner le flux de premier canal de symboles désétalés en phase en accord avec la longueur du premier code ; et
additionner le flux de premier canal de symboles désétalés en quadrature en accord avec la longueur du premier code.

59. Procédé selon la revendication 57, dans lequel la rotation de phase et la normalisation comprennent :
multiplier le flux de premier canal de symboles désétalés en phase par le signal de filtre de pilote en phase pour fournir un flux de données de premier canal de décision pondérée en phase ; et
multiplier le flux de premier canal de symboles désétalés en quadrature par le signal de filtre de pilote en quadrature pour fournir un flux de données de premier canal de décision pondérée en quadrature.

60. Procédé selon la revendication 59, comprenant :
additionner les flux de données de premier canal de décision pondérée en phase et en quadrature.

61. Procédé selon la revendication 60, comprenant en outre l'addition du flux de données de premier canal de décision pondérée sur un nombre prédéterminé de symboles de décision pondérée pour produire un flux de données de premier canal de décision pondérée additionné.

62. Procédé selon la revendication 57, comprenant en outre :
multiplier le flux d'échantillons en phase par un second code pour produire un flux de second canal de symboles désétalés en phase ;
multiplier le flux d'échantillons en quadrature par le second code pour produire un flux de second canal de symboles désétalés en quadrature ; et
faire tourner en phase et normer le flux de second canal de symboles en phase et le flux de second canal de symboles en quadrature pour produire un flux de données de second canal de décision pondérée.

63. Procédé selon la revendication 57, 58 ou 62, dans lequel un code comprend un code de Walsh.

64. Procédé selon la revendication 57 ou 63, dans lequel le premier code a une longueur de quatre éléments de code.

65. Procédé selon la revendication 57 ou 63, dans lequel le premier code est égal à +,+,-,-.

66. Procédé selon la revendication 57 ou 63, dans lequel le premier code est égal à +,-,+,-.

67. Procédé selon la revendication 57 ou 63, dans lequel le premier code a une longueur de deux éléments de code.

68. Procédé selon la revendication 57 ou 63, dans lequel le premier code est égal à +,-.

69. Procédé selon la revendication 57 ou 63, dans lequel le premier code a une longueur de huit éléments de code.

70. Procédé selon la revendication 57 ou 63, dans lequel le premier code est égal à +,+,+,+,-,-,-,-.

71. Procédé selon la revendication 62, dans lequel la longueur du premier code n'est pas égale à la longueur du deuxième code.

72. Procédé selon la revendication 71, dans lequel le second code a une longueur de quatre éléments de code.

73. Procédé selon la revendication 71, dans lequel le second code est égal à +,+,-,-.

74. Procédé selon la revendication 71, dans lequel le second code est égal à +,-,+,-.

75. Procédé selon la revendication 71, dans lequel le second code a une longueur de deux éléments de code.

76. Procédé selon la revendication 71, dans lequel le second code est égal à +,-.

77. Dispositif pour démoduler un signal reçu de façon appropriée d'une station de base à partir d'une transmission dans un système de communication, **caractérisé en ce qu'**il comprend :
un multiplieur complexe (301-304) agencé pour multiplier de façon complexe un signal complexe reçu par un code d'étalement pseudo-aléatoire en phase et un code d'étalement pseudo-aléatoire en quadrature pour fournir un flux d'échantillons en phase et un flux d'échantillons en quadrature ;
un premier filtre pilote (314) agencé pour filtrer le flux d'échantillons en phase pour fournir un signal de filtre pilote en phase ;
un second filtre pilote (314) agencé pour filtrer le flux d'échantillons en quadrature pour fournir un signal de filtre pilote en quadrature ;
un premier multiplieur (310) agencé pour multiplier le flux d'échantillons en phase par un premier code d'une pluralité de codes, chacun de la pluralité de codes ayant une longueur différente et étant orthogonal aux codes restants, pour produire un flux de premier canal de symboles désétalés en phase ;
un second multiplieur (310) agencé pour multiplier le flux d'échantillons en quadrature par le premier code pour produire un flux de premier canal de symboles désétalés en quadrature ; et
des premiers moyens (316, 320) pour faire tourner en phase et normer le flux de premier canal de symboles désétalés en phase et le flux de premier canal de symboles désétalés en quadrature en accord avec le signal de filtre pilote en phase et le signal de filtre pilote en quadrature pour produire un flux de données de premier canal de décision pondérée.

78. Dispositif selon la revendication 77, comprenant en outre :
un premier additionneur (312) agencé pour additionner le flux de premier canal de symboles désétalés en phase en accord avec la longueur du premier code ; et
un second additionneur (312) agencé pour additionner le flux de premier canal de symboles désétalés en quadrature en accord avec la longueur du premier code.

79. Dispositif selon la revendication 77, comprenant en outre :
un troisième multiplieur (316) agencé pour multiplier le flux de premier canal de symboles désétalés en phase par le signal de filtre de pilote en phase pour fournir un flux de données de premier canal de décision pondérée en phase ; et
un quatrième multiplieur (316) agencé pour multiplier le flux de premier canal de symboles désétalés en quadrature par le signal de filtre de pilote en quadrature pour fournir un flux de données de premier canal de décision pondérée en quadrature.

80. Dispositif selon la revendication 79, comprenant en outre un troisième additionneur (322) agencé pour additionner les flux de données de premier canal de décision pondérée en phase et en quadrature.

81. Dispositif selon la revendication 78, comprenant en outre un quatrième additionneur (322) agencé pour additionner le flux de données de premier canal de décision pondérée sur un nombre prédéterminé de symboles de décision pondérée pour produire un flux de données de premier canal de décision pondérée additionné.

82. Dispositif selon la revendication 77, comprenant en outre :
un troisième multiplieur (316) agencé pour multiplier le flux d'échantillons en phase par un second code pour produire un flux de second canal de symboles désétalés en phase ;
un quatrième multiplieur (316) agencé pour multiplier le flux d'échantillons en quadrature par le second code pour produire un flux de second canal de symboles désétalés en quadrature ; et
des seconds moyens pour faire tourner en phase et normer le flux de second canal de symboles en phase et le flux de second canal de symboles en quadrature pour produire un flux de données de second canal de décision pondérée.

83. Dispositif selon la revendication 77, 78 ou 81, dans lequel un code comprend un code de Walsh.

84. Dispositif selon la revendication 77 ou 83, dans lequel le premier code a une longueur de quatre éléments de code.

85. Dispositif selon la revendication 77 ou 83, dans lequel le premier code est égal à +,+,-,-.

86. Dispositif selon la revendication 77 ou 83, dans lequel le premier code est égal à +,-,+,-.

87. Dispositif selon la revendication 77 ou 83, dans lequel le premier code a une longueur de deux éléments de code.

88. Dispositif selon la revendication 77 ou 83, dans lequel le premier code est égal à +,-.

89. Dispositif selon la revendication 77 ou 83, dans lequel le premier code a une longueur de huit éléments de code.

90. Dispositif selon la revendication 77 ou 83, dans lequel le premier code est égal à +,+,+,+,-,-,-,-.

91. Dispositif selon la revendication 82, dans lequel la longueur du premier code n'est pas égale à la longueur du deuxième code.

92. Dispositif selon la revendication 91, dans lequel le second code a une longueur de quatre éléments de code.

93. Dispositif selon la revendication 91 ou 92, dans lequel le second code est égal à +,+,-,-.

94. Dispositif selon la revendication 91 ou 92, dans lequel le second code est égal à +,-,+,-.

95. Dispositif selon la revendication 91, dans lequel le second code a une longueur de deux éléments de code.

96. Dispositif selon la revendication 91 ou 95, dans lequel le second code est égal à +,-.
